# EUROPEAN PATENT APPLICATION

(11) **EP 3 255 950 A1**
(43) Date of publication of application: **13.12.2017**
(21) Application number: 17174184.6
(22) Date of filing: 02.06.2017
(51) Int. Cl.: H04W 72/12, H04W 88/04, H04W 76/02

(54) **METHOD AND APPARATUS FOR RESOURCE ALLOCATION ON D2D RELAY CHANNEL IN A WIRELESS COMMUNICATION SYSTEM**

(30) Priority: 06.06.2016 US 201662346074 P; 06.06.2016 US 201662346120 P
(71) Applicant: ASUSTek Computer Inc., Peitou, Taipei-City 112 (TW)
(72) Inventor: YIN, Wei-Ming, Taipei City 112 (TW); CHEN, Wei-Yu, Taipei City 112 (TW)
(74) Representative: Hoefer & Partner Patentanwälte mbB

(57) **Abstract**

A method and apparatus are disclosed for a first UE to support device-to-device relay communication in a wireless communication system. Preferably, the method the first UE receives a transport block from a second UE, wherein the transport block contains a MAC control element (2405). The method further includes the first UE triggers and transmits a BSR to a base station, wherein the BSR considers the MAC control element as part of buffer size (2420).

## Description

This disclosure generally relates to wireless communication networks, and more particularly, to a method and apparatus for resource allocation on relay channel in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure is an Evolved Universal Terrestrial Radio Access Network (E-UTRAN). The E-UTRAN system can provide high data throughput in order to realize the above-noted voice over IP and multimedia services. A new radio technology for the next generation (e.g., 5G) is currently being discussed by the 3GPP standards organization. Accordingly, changes to the current body of 3GPP standard are currently being submitted and considered to evolve and finalize the 3GPP standard.

### SUMMARY

A method and apparatus are disclosed for a first UE (User Equipment) to support device-to-device relay communication in a wireless communication system are disclosed and defined in independent claims 1, 5, and 11, respectively. Preferred embodiments thereof are defined in the dependent claims, respectively. Preferably, the method the first UE receives a transport block from a second UE, wherein the transport block contains a MAC (Media Access Control) control element. The method further includes the first UE triggers and transmits a BSR (Buffer Status Report) to a base station, wherein the BSR considers the MAC control element as part of buffer size.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 is a reproduction of Figure 4.2-1 of 3GPP TS 23.303 v13.2.0.
FIG. 6 is a reproduction of Figure 5.2-1 of 3GPP TR 22.861 v1.0.0.
FIG. 7 is a diagram according to one exemplary embodiment.
FIG. 8 is a diagram according to one exemplary embodiment.
FIG. 9 is a diagram according to one exemplary embodiment.
FIG. 10 is a diagram according to one exemplary embodiment.
FIG. 11 is a diagram according to one exemplary embodiment.
FIG. 12 is a diagram according to one exemplary embodiment.
FIG. 13 is a diagram according to one exemplary embodiment.
FIG. 14 is a diagram according to one exemplary embodiment.
FIG. 15 is reproduction of Figure 5.10.2-1 of 3GPP TS 36.331 v13.1.0.
FIG. 16 is reproduction of Figure 6.1.3.1a-1 of 3GPP TS36.321 v13.1.0.
FIG. 17 is a reproduction of Figure 10.1.5.1-1 of 3GPP TS 36.300 v13.3.0.
FIG. 18 is a reproduction of Table 6.2.1-1 of 3GPP TS36.321 v13.1.0.
FIG. 19 is a reproduction of Table 6.2.1-2 of 3GPP TS36.321 v13.1.0.
FIG. 20 is a diagram according to one exemplary embodiment.
FIG. 21 is a diagram according to one exemplary embodiment.
FIG. 22 is a diagram according to one exemplary embodiment.
FIG. 23 is a diagram according to one exemplary embodiment.
FIG. 24 is a flow chart according to one exemplary embodiment.
FIG. 25 is a diagram according to one exemplary embodiment.
FIG. 26 is a diagram according to one exemplary embodiment.
FIG. 27 is a diagram according to one exemplary embodiment.
FIG. 28 is a diagram according to one exemplary embodiment.
FIG. 29 is a diagram according to one exemplary embodiment.
FIG. 30 is a flow chart according to one exemplary embodiment.
FIG. 31 is a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including: RP-160677, "New SI: Further Enhancements LTE Device to Device, UE to Network Relays for Wearables"; TS 23.303 v13.2.0, "Proximity-based services(ProSe)-stage2"; TR 22.861 V1.0.0, "Feasibility Study on New Services and Markets Technology Enablers for Massive Internet of Things; Stage 1"; R2-162529, "On Scenarios and Objectives for Wearables and feD2D", Ericsson; RP-160183, "NB-IOT Status Report to TSG"; TR 23.720 v13.0.0, "Architecture enhancements for Cellular Internet of Things"; TS 36.213 v13.1.1, "E-UTRA: Physical layer procedures"; TS 36.212 v13.1.0, "E-UTRA: Multiplexing and channel coding"; TS 36.211, "E-UTRA: Physical channels and modulation"; TS 36.211 v13.1.0, "E-UTRA: Physical channels and modulation"; TS 36.321 v13.1.0, "E-UTRA: Medium Access Control(MAC) Protocol Specification"; TS 24.334 v13.3.1, "Proximity-services (ProSe) User Equipment (UE) to ProSe function protocol aspects; Stage 3"; R2-163056, "Report from LTE Break-Out Session (V2V, V2X, FeD2D, LATRED)"; TS 36.331 v13.1.0, "E-UTRA RRC protocol specification"; TS 36.322 v13.0.0, "E-UTRA RLC protocol specification"; and TS 36.323 v13.0.0, "E-UTRA PDCP protocol specification". The standards and documents listed above are hereby expressly incorporated by reference in their entirety.

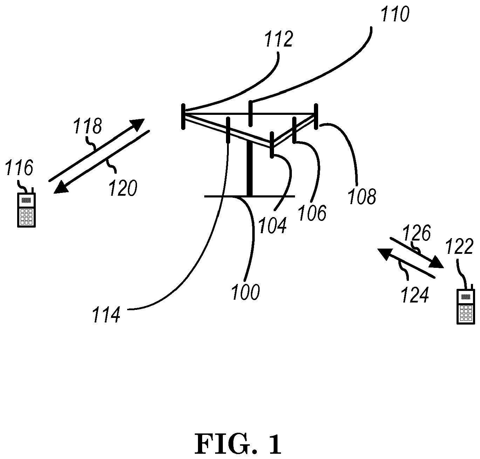

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

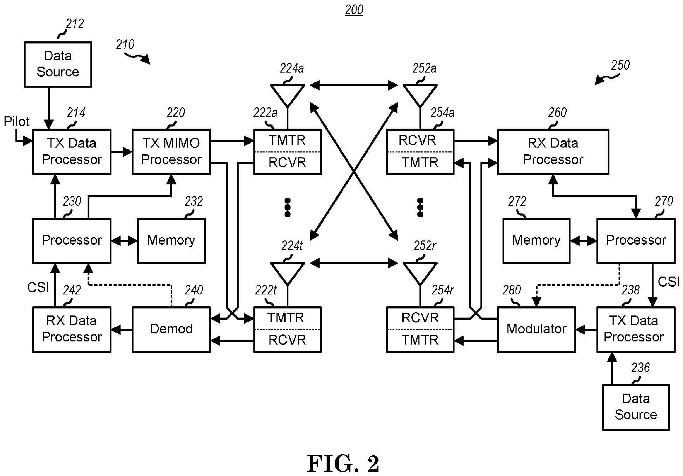

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

Preferably, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

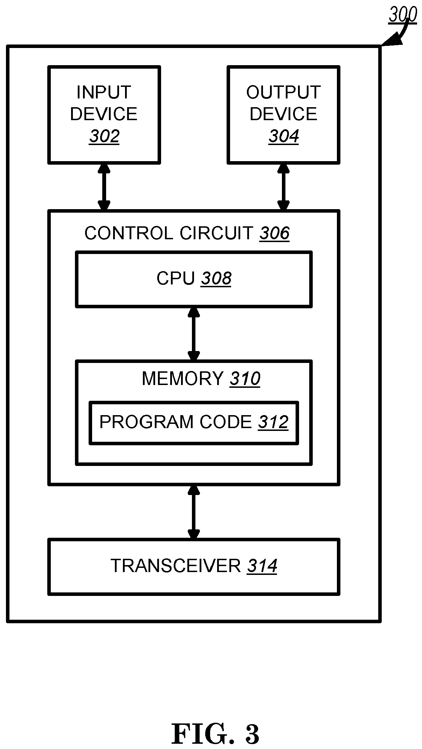

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1 or the base station (or AN) 100 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

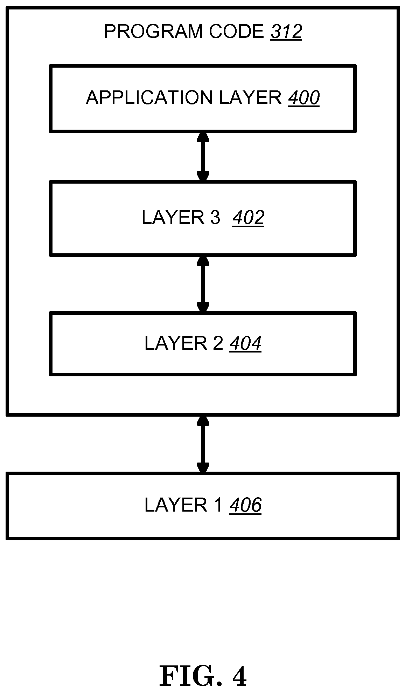

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

In 3GPP RP-160677, a new study item for further enhancing UE-to-Network relay is introduced. Regarding the study item, the UE-to-Network relay will need to be enhanced to relay traffic from IoT (Internet of Things) devices and/or wearable devices for optimizing power consumption of IoT and wearable devices. In assumption of the SI, the IoT and wearable devices will have basic LTE capability for connecting eNB and the D2D link between the IoT/wearable devices and UE-to-Network Relay can be PC5 (Sidelink) interface, Blue-tooth, or WiFi.

In particular, 3GPP RP-160677 states:

### 3 Justification

The Study of Proximity-based Services (captured in [TR 22.803]) identified use cases and scenarios that could be provided by the 3GPP LTE system based on UEs being in proximity of each other. The identified scenarios included General and Public Safety services and requirements documented in [TS 22.278].

The normative RAN work on enabling Proximity Services was started in LTE Rel.12 [RP-140518] with focus on Public Safety applications. The following major features were standardized in LTE Rel.12:
- Device-to-device discovery in network coverage (both Commercial and Public Safety use cases).
- Device-to-device broadcast communication, with higher layers supporting groupcast and unicast communication for within/partial and out of network coverage scenarios mainly targeting Public Safety use cases.

The work on Public Safety services continued in LTE Rel.13 [RP-150441] to enable: Type-1 discovery for the partial and outside network coverage scenarios; the L3-based UE-to-Network relaying reusing LTE Rel.12 D2D communication; and basic priority handling mechanisms for D2D communication.

There is a lot of interest to use LTE technology to connect and manage low cost MTC devices. One important example of such low cost devices are wearables, which also have the benefit of almost always being in close proximity to a smartphone that can serve as a relay. In this SI we aim to study the application of D2D, including non-3GPP short-range technologies, to such devices. In particular there are two main aspects to be further enhanced in LTE technology to enable D2D aided wearable and MTC applications:
- Enhancement of UE-to-Network relaying functionality. The UE-to-Network relaying architecture in ProSe does not differentiate the traffic of the remote UE from that of the relay UE in the access stratum. This model limits the ability of the network and the operator to treat the remote UE as a separate device, e.g. for billing or security. In particular, the 3GPP security associations never reach end-to-end between the network and the remote UE, meaning that the relay UE has clear text access to the remote UE's communications. UE-to-Network relaying should be enhanced to support end-to-end security through the relay link, service continuity, E2E QoS where possible, efficient operation with multiple remote UEs, and efficient path switching between Uu and D2D air-interfaces. Relaying using D2D can also be based on non-3GPP technologies such as Bluetooth and Wi-Fi. Some enhancements such as service continuity can make relaying more attractive for such technologies in commercial use cases. This can be especially useful to wearables due to their usage patterns with proximity to the user's smartphone, as well as form-factor limitations that may make a direct Uu connection less practical (e.g. limits on battery size). Relaying can enable significant power savings for remote UEs (that are getting their traffic relayed). This is especially true for deep coverage scenarios. One cost effective way of introduce relaying is to use unidirectional D2D links between remote devices and relay devices. In this case, the relay UE is utilised to relay only uplink data from the remote UE. The advantage of this approach is no additional RF capability for D2D reception is added to the remote UE.
- Enhancements to enable reliable unicast PC5 link to at least support low power, low rate and low complexity/cost devices. Low cost D2D devices can be enabled by reusing the ideas developed during NB-IoT (Narrow Band - loT) and eMTC studies, e.g., the NB-IoT/eMTC uplink waveform can be reused for D2D. Such devices will potentially use a single modem for communicating with the Internet/cloud and for communicating with proximal devices. The current PC5 link design inherited from the broadcast oriented design driven by public safety use cases, represents a bottleneck that prevents low power and reliable D2D communication, due to lack of any link adaptation and feedback mechanisms,. These shortcomings do not allow achieving target performance metrics for wearable and MTC use cases in terms of power consumption, spectrum efficiency, and device complexity. Reduced power consumption and low complexity are the key attributes of wearable and MTC use cases that are typically characterized by small form factors and long battery lifetime.

This study item aims to evaluate and study the benefits of enhanced UE-to-network relaying, and of using an enhanced form of the LTE sidelink air-interface, for D2D aided services focusing on wearable and MTC applications. In order to enable these use cases, the sidelink air-interface should be optimized for energy efficient communication supporting various data rates.

### 4 Objective

### 4.1 Objective of SI or Core part WI or Testing part WI

### Until RAN#72, evaluate scenarios in RAN2 considering progress in SA WGs, and refine objectives accordingly.

[The objective of this study item is to study enhancements to UE-to-network relaying and to the LTE D2D framework for applications targeting wearables use cases. It is assumed that remote UEs can support both WAN and D2D connection, and that remote UEs have 3GPP subscription credentials. The D2D connection is realized by either LTE sidelink or non-3GPP technology. For LTE D2D enhancements the study is targeting licensed spectrum only for commercial (in-coverage scenario) and public safety cases (both in-coverage and out-of-coverage scenarios)]. Following is the list of objectives.
1. Study and define a generic UE-to-Network Relay architecture, including methods for the network to identify, address, and reach a remote UE via a relay UE. [RAN2]
   a. Study the possibility of a common solution supporting the following use cases:[RAN2]
      i. UE to network relaying over non-3GPP access (Bluetooth/WiFi), where E2E QoS may not be guaranteed.
      ii. UE to network relaying over LTE sidelink. Assess standard impact of E2E QoS.
      iii. Unidirectional and bidirectional UE to network relay.
   b. Investigate potential impacts to protocol stack, procedure and signalling mechanisms, such as authorization, connection setup, UE mobility, parameter configuration and security, allowing multiple remote UEs via a relay UE.[RAN2, RAN3]
   c. Path selection/switch between the cellular link (Uu air interface) and relay link and provide service continuity [RAN2, RAN3].
2. Study necessary LTE sidelink enhancements.
   a. Introduce additional evaluation assumptions to the sidelink evaluation methodology defined in TR 36.843 focussing on analysis of wearable use cases [RAN1].
   b. Identify mechanisms to enable more efficient, reliable, and/or low complexity/cost & low energy sidelink [RAN1, RAN2, RAN4].
   c. Study additional co-existence issues with adjacent carrier frequencies that may arise due to the new mechanisms identified [RAN4].
   FDD, H-FDD and TDD should be considered for this work. The impact of sidelink operation on cellular traffic, spectrum and QoS of other cellular services are assumed to be fully controlled by the network.

The study will consider the outcome of potential SA1 work on the related requirements. SA WGs will be consulted if deemed necessary in the study. Some parts of the objectives can be concluded earlier than the SI completion date.]

The functionalities and interfaces of proximity service, i.e., ProSe (Proximity-based Service) or D2D (Device to Device), is introduced and discussed in 3GPP TS 23.303 as follows:

### 4.2 Architectural Reference Model

Figure 4.2-1 shows the high level view of the non-roaming architecture. In this figure, UE A and UE B use a subscription of the same PLMN.

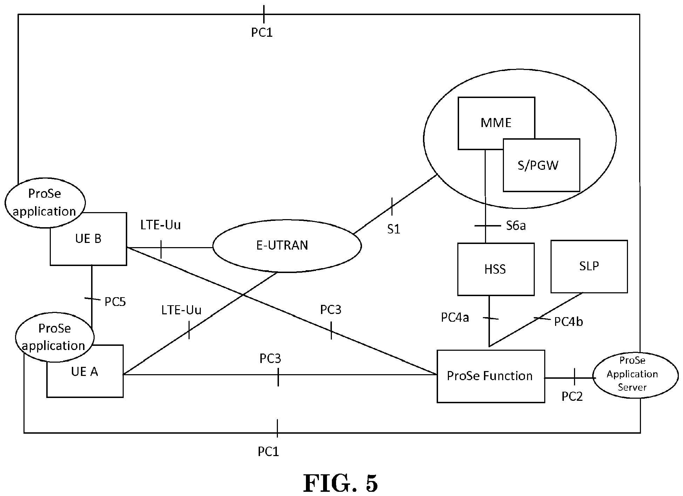

### [Figure 4.2-1 of 3GPP TS 23.303 v13.2.0, entitled "Non-Roaming Reference Architecture" is reproduced as FIG. 5.]

The following figure 4.2-2 show the high level view of the non-roaming inter-PLMN architecture. In this figure, PLMN A is the HPLMN of UE A and PLMN B is the HPLMN of UE B.

The main scenario in this SI is ever studied in 3GPP TR 22.861 v1.0.0 and is quoted as below. It covers three connection models, including: direct 3GPP connection, indirection 3GPP connection (e.g., a smart wearable that communicates through a smart phone with the 3GPP network), and direct device connection (e.g., a biometric device that communicates directly with other biometric devices or with a smart phone associated with the same patent). The underlying assumption is that a wearable/IOT device most of the time can operate in the relaying mode by exploiting proximity of a relay device. In rare cases (when out of proximity of the relay device), it is also able to communicate directly with 3GPP network by using cellular connection. It is also assumed the D2D communication with the Relay device may be performed using either 3GPP technology (e.g., sidelink) or non-3GPP connectivity technology (e.g., WLAN).

In particular, 3GPP TR 22.861 v1.0.0 states:

### 5.2 Connectivity aspects

### 5.2.1 Description

As described in the Smart Wearables and Bio-connectivity related use cases in [2], the Internet of Things will support various connectivity models. The devices can connect with the network directly or connect with the network using another device as a relay UE, or they may be capable of using both types of connections. The devices can range from simple wearables, such as a smart watch or a set of sensors embedded in clothing, to a more sophisticated wearable device monitoring biometrics. They can also be non-wearable devices that communicate in a Personal Area Network such as a set of home appliances (e.g., smart thermostat and entry key), or the electronic devices in an office setting (e.g., smart printers), or a smart flower pot that can be remotely activated to provide water to the plant. Essentially, one or more of the following connection models will apply for any device. Figure 5.2-1 illustrates the connection models,
- Direct 3GPP connection (e.g., a sensor that communicates with an application server or with another device through 3GPP network)
- Indirect 3GPP connection (e.g., a smart wearable that communicates through a smart phone to the 3GPP network)
- Direct device connection (e.g., a bio metric device that communicates directly with other biometric devices or with a smart phone associated with the same patient).
3GPP and non-3GPP RATs may be supported for connectivity scenarios. 3GPP RAT over licensed band or unlicensed band may be supported for connectivity scenarios.

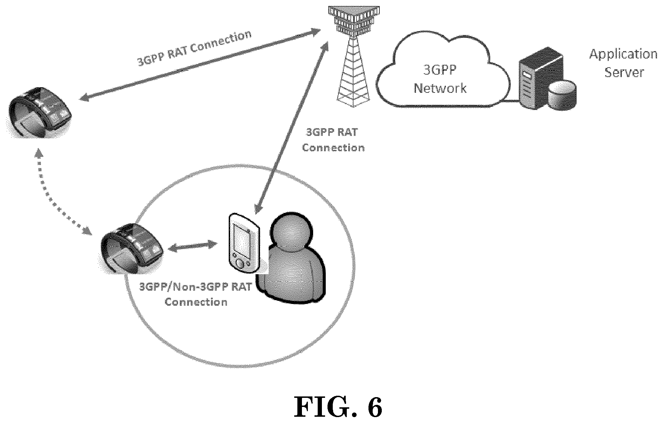

### [Figure 5.2-1 of 3GPP TR 22.861 v1.0.0, entitled "Overview of the connectivity aspects" is reproduced as FIG. 6.]

The UE procedures related to sidelink share channel and sidelink control channel are described in Sections 14.1 and 14.2, respectively, of 3GPP TS 36.212 v13.1.1.

In general, the invention is to handle the resource allocation related issue over PC5 interface. Regarding resource scheduling in R13 ProSe communication, a UE is configured to use the sidelink resource with either Mode 1 or Mode 2 (such as scheduled-based or contention-based, respectively) after sending *sidelinkUEInformation* message to base station. If sidelink resource is configured as scheduled-based, the UE will send buffer status report, such as SL-BSR (Sidelink Buffer Status Report), for asking sidelink resource through Uu interface and get SL-grant on PDCCH (Physical Downlink Control Channel) through Uu interface. However, this mechanism may be adjusted in R14 owing to power consumption requirement. Before introducing the issue and solution, the potential transmission model of control plane and user plane is analyzed.

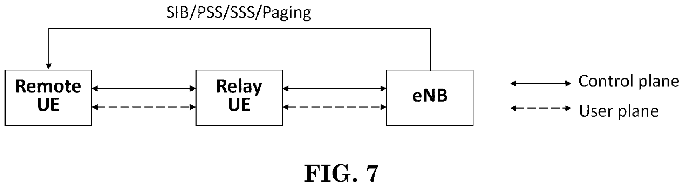

Assumption 1 - Several transmission models for control plane and user plane have been proposed in 3GPP R2-162529. Considering NB-IOT WI agreement as discussed in 3GPP RP-160183, CP (Control Plane) and UP (User Plane) solutions are defined in 3GPP TR 23.720 v13.0.0, and CP solution is mandatory and is suggested for small data transmission. For CP solution, data is carried as NAS (Non-Access Stratum) PDU (Protocol Data Unit). If signaling is delivered via Uu interface, then data will be sent over Uu interface and no energy is saved. Therefore, at least for uplink signaling and uplink data, we assume that it is delivered over relay link for energy saving. Considering a remote UE in deep coverage hole, more repetitions are required for coverage enhanced which consumes more Uu resource. For a general solution, we assume all signaling and data are delivered over relay link if a suitable relay UE is selected while SIB/PSS/SSS/paging is still delivered via Uu interface. The assumed transmission model is shown in FIG. 7, that is using relay link to carry control plane and user plane.

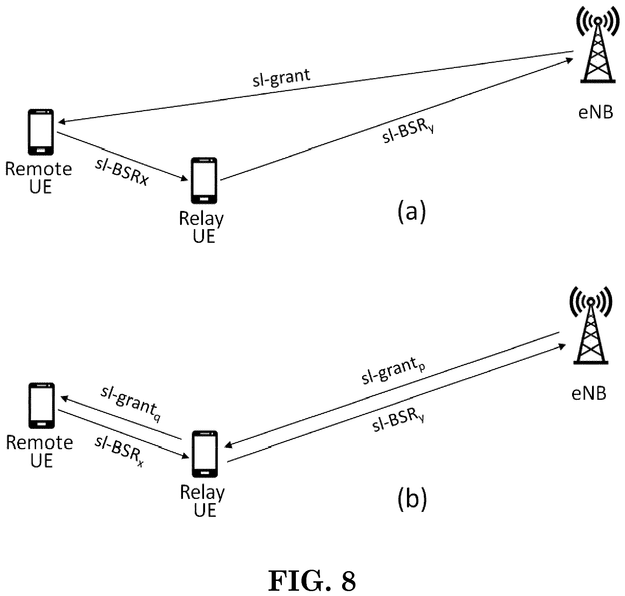

*Assumption 2 -* Based on the above *Assumption 1,* SL-BSR is assumed sent over relay link. As to SL-grant, if it is still sent on PDCCH through Uu interface, the UE needs to monitor PDCCH, in addition to SIB/paging, and may possibly be in enhanced coverage mode. To improve power efficiency, SL-grant(a sidelink resource allocation) is assumed to be delivered through relay link, as in FIG. 8(b). Accordingly, a first SL-grant is sent to relay UE from eNB via Uu and relay UE will then sent a second SL-grant to remote UE via PC5. Notably, we do not assume or imply the first SL-grant sent from eNB to relay UE is same to the second SL-grant sent from relay UE to remote UE.

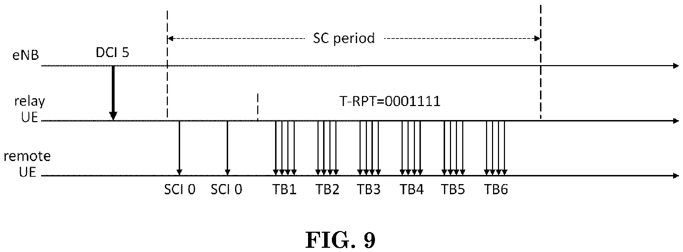

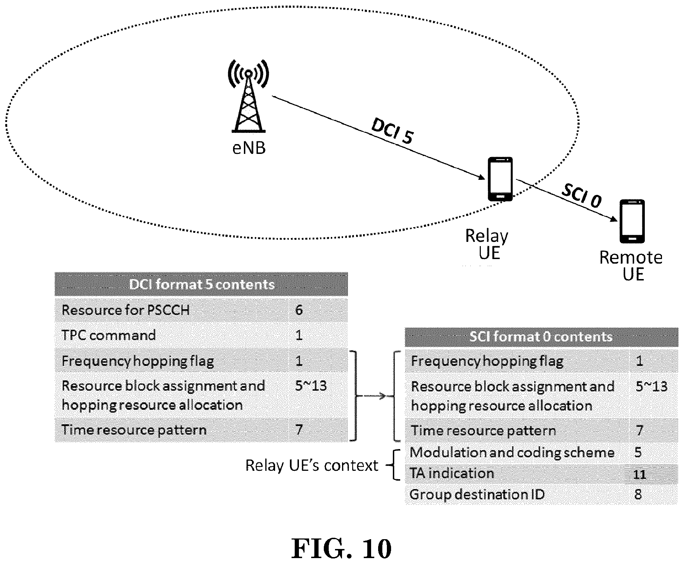

**Issue 1 and Solution** - In legacy R13 sidelink transmission, illustrated in FIG. 9, the eNB sends a SL-grant (e.g., DCI 5) to a UE via Uu interface and the UE uses the SL-grant in next SC period and sends SCI 0 in SA pool as well as performs transmission in the sidelink resource specified in SCI 0. The remote UE monitors the SA pool to determine whether it should receive data in this SC period. The detailed operation of sidelink transmission is defined in 3GPP TS 36.213. Also, the relationship between DCI 5 and SCI 0 is illustrated in exemplary FIG. 10.

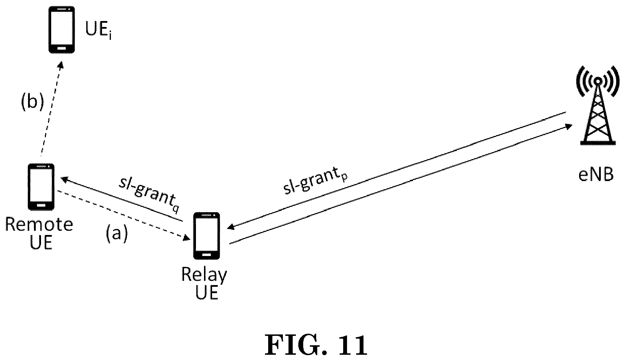

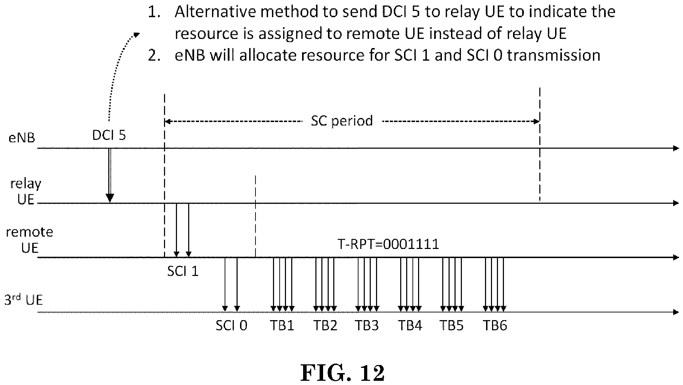

It seems that the remote UE will exercise LCP (Logical Channel Prioritization) whenever there is a SL-grant, and usually the relay UE is not expected to know the result of LCP. That is the relay UE does not know the sidelink resource defined in the SL-grant is used for case (a) or case (b) shown in FIG. 11. Based on above assumptions, a mechanism to deliver a sidelink resource grant to a remote UE is proposed hereby and it is also expected that the impact to existed operation should be minimized. That is 1) the eNB sends a SL-grant (such as DCI 0) on Uu interface to relay UE, 2) the SL-grant is used in next SC period, and 3) a target UE monitors SA pool to determine whether there is traffic for him. Therefore, the invention is, in general, to design a workflow shown in exemplary FIG. 12.

In FIG. 12, the eNB sends the DCI 0 to a relay UE with a different method compared to R13 SL-grant, e.g., different SL-RNTI (Sidelink Radio Network Temporary Identifier). The relay UE would know that the SL-grant is for one remote UE or for itself by which method it uses to decode the SL-grant. If the SL-grant is for a remote UE, then 4 transmission opportunities is defined in SA pool in next SC period. The former 2 transmission opportunities are for the relay UE to send sidelink resource grant, which could be a new SCI format (such as SCI 1 in FIG. 12), to the remote UE, and the latter 2 transmission opportunities are for the remote UE to send SCI 0. Thereafter, the remote UE would perform transport block transmission in the SC period to target UE, as 3^{rd} UE in FIG. 12. The target UE may be the relay UE or other UE(s).

Preferably, the eNB sends a first sidelink resource grant to a first UE and the first sidelink resource grant carries a first information to tell the first UE that the sidelink resource defined in the first sidelink resource grant is for the first UE usage or not. The first information could be an identifier. Furthermore, the first information is a RNTI, and the RNTI is used to scramble the first sidelink resource grant. In addition, the first information could be a flag.

Specifically, if the sidelink resource defined in the first sidelink resource grant is for the first UE usage, there are 2 transmission opportunities defined in the SA pool of the next SC period. Otherwise, if the sidelink resource defined in the first sidelink resource grant is not for the first UE usage, there are more than 2 transmission opportunities (e.g., 4 transmission opportunities) defined in the SA (Scheduling Assignment) pool of the next SC (Sidelink Control) period. In later case, the first UE sends a second sidelink resource grant on the former 2 transmission opportunities in SA pool or in another resource pool for control signal before the SA pool to a second UE. Specifically, the format of the first sidelink resource grant is not same to that of the second sidelink resource grant. The second UE receives the second sidelink resource grant and sends a sidelink resource control information on the later 2 transmission opportunities in SA pool and performs transport block transmission on sidelink resource defined in the sidelink resource control information. The receiver of the transport block transmission is a plurality of UEs. Also, the plurality of UEs may or may not include the first UE. In particular, the format of the second sidelink resource grant is not same to that of the sidelink resource control information, wherein the sidelink resource control information is SCI 0.

### Issue 2 and Solution

*Assumption 3 -* If a SL-grant is determined to be sent to a specific remote UE, a new SCI format is needed for this purpose, say assign sidelink resource from a relay UE to a remote UE via PC5 interface. Basically, if the length of the new SCI format is not equal to that of SCI 0, the decoding complexity increases owing to more candidates for blind decoding. Considering the IoT device is potentially low cost and low complexity is expected, it is assumed that the length of the new SCI format is same to that of SCI 0. However, the detail/design of new SCI format is not included in this invention. Moreover, it is assumed that the new SCI format assigns the sidelink resource only for the remote UE to send data to the relay UE, which could be the most general case.

Based on the above assumptions, once a SL-grant (e.g., in new SCI format) is sent to a remote UE, how would the remote UE know that this is new SCI format instead of SCI 0? In legacy R13 sidelink control channel, the scrambling sequence for SCI 0 is fixed to *cᵢₙₜᵢ*=510 as defined in 3GPP TS 36.211, such as SS0 (Sscrambling sequence 0) in the following discussion. Therefore, the current invention proposes to use a different scrambling sequence for the new SCI format. As legacy LTE system, the scrambling sequence could be a kind of RNTI. However, since the volume of IoT devices may be large, another RNTI should be used to scramble the new SCI format, e.g., SS1(Scrambling sequence 1) in the following discussion. The SS1 should be valid in the range of the relay UE. Specifically, the SS1 could be provided by eNB or by the relay UE. Furthermore, the SS1 may be the SL-RNTI of the relay UE or a newly assigned RNTI by the eNB.

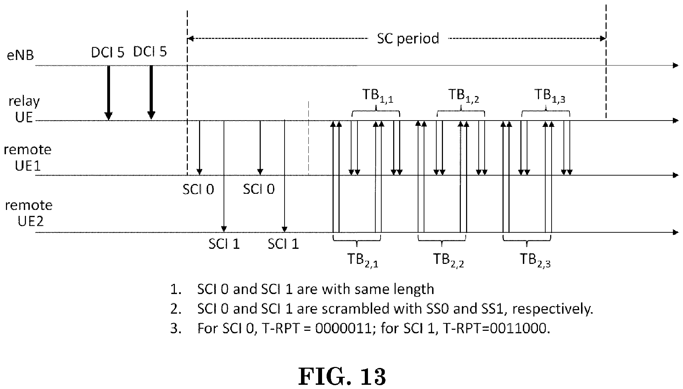

Preferably, a remote UE is configured with SS1 by the eNB when it establishes a relay connection with a relay UE. Alternatively, the SS1 may be provided by the relay UE. Thereafter, the remote UE will use SS0 and SS1 to decode sidelink control channel. If a SCI is decoded successfully with SS0, it is SCI 0 and the data sent in this SC period is possibly for him. If a SCI is decoded successfully with SS1, it is the new SCI format and the remote UE will check the content of the new SCI format to see whether the sidelink resource defined in the new SCI format is scheduled to the remote UE. If the resource is scheduled to the remote UE, the remote UE could use defined resource to send data to the relay UE in the SC period. One exemplary embodiment is shown in FIG. 13.

Preferably, a power control field is included in the new SCI format for the remote UE to control transmission power on sidelink resource defined in the new SCI format. Preferably, a target UE identifier is included in the new SCI format for the remote UE to determine whether this new SCI format is for itself or not. Specifically, the target UE identifier could be configured by the eNB during the connection establishment. Furthermore, the target UE identifier could be unique to the relay UE. In addition, the target UE identifier could be unique to the eNB.

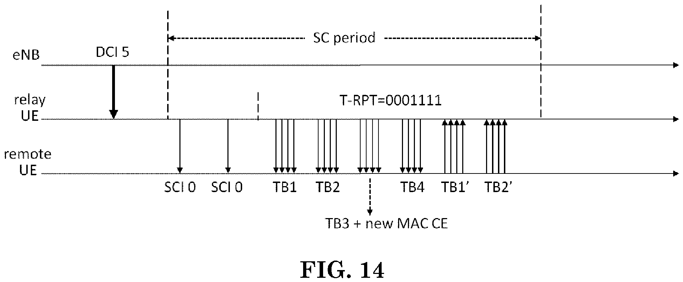

The new sidelink resource grant should not be limited to layer-1 command, e.g., SCI. A layer-2 solution could be adopted. As illustrated in FIG. 14, a MAC (Media Access Control) control information used to define/change the resource owner and no new SCI format is defined. In particular, the MAC control information is a MAC CE. Alternatively, the MAC control information is a MAC subheader. Furthermore, when a remote UE decodes the MAC control information successfully and the MAC control information includes a indicator to indicate that some new transmission opportunities are reserved for the remote UE, the resource owner could change from the relay UE to the remote UE for those new transmission opportunities.

A similar concept could be applied to any one-to-one communication obtaining multiple transmission resource (e.g., SPS resource, multiple new transmission opportunities) if both transmitter and receiver sides understand the multiple transmission resource. Preferably, the indicator could be a LCID included in a MAC subheader as defined in 3GPP TS 36.321. Alternatively, the indicator could be a boolean flag included in a MAC CE defined in 3GPP TS 36.321, and could indicate that whether the following new transmission resource is reserved for the remote UE or not. However, since MAC PDU decoding needs more time and next new transmission opportunity may be the next subframe according to the T-RPT (Time Resource Pattern). The remote UE may fail to use the next new transmission opportunity. Alternatively, the indicator is a value to indicates that from which new transmission opportunity the resource owner is changed to the remote UE. Alternatively, the indicator may be a bitmap to show that the owner of each new transmission opportunty. Furthermore, bit value 0 of the bitmap implies the resource is used by the relay UE; otherwise, the resource is used by the remote UE. Each bit points to each new transmission opportunity or each scheduled subframe. Moreover, after the remote UE (receiver side) receives a new MAC CE, the remote UE will change to be a transmitter to use rest of resource. And the remote UE may provide an acknowledgement or a response to the original transmitter based on the rest of resource. The acknowledgement or response could be another new MAC CE or physical layer signaling.

In general, the invention could provide an efficient and compatible way to deliver sidelink resource to a remote UE. First, the blink decoding effort to a relay UE is not significantly increased. Second, remote UE's behavior is not changed much. The remote UE monitors the SA pool for SCI 0 as well as a new SCI format, which is necessary considering new behavior added. The SL-grant is still valid in next SC period. QoS performance is expectedly maintained.

3GPP TS 36.331 describes the detail procedure of requesting Sidelink related procedure including how to obtain resource and communication configuration for sidelink as follows:

### 5.10 Sidelink

### 5.10.1 Introduction

The sidelink communication and associated synchronisation resource configuration applies for the frequency at which it was received/ acquired. Moreover, for a UE configured with one or more SCells, the sidelink communication and associated synchronisation resource configuration provided by dedicated signalling applies for the PCell/ the primary frequency. The sidelink discovery and associated synchronisation resource configuration applies for the frequency at which it was received/ acquired or the indicated frequency in the configuration. For a UE configured with one or more SCells, the sidelink discovery and associated synchronisation resource configuration provided by dedicated signalling applies for the the PCell/ the primary frequency / any other indicated frequency.
NOTE 1: Upper layers configure the UE to receive or transmit sidelink communication on a specific frequency, to monitor sidelink discovery announcements on one or more frequencies or to transmit sidelink discovery announcements on a specific frequency, but only if the UE is authorised to perform these particular ProSe related sidelink activities.
NOTE 2: It is up to UE implementation which actions to take (e.g. termination of unicast services, detach) when it is unable to perform the desired sidelink activities, e.g. due to UE capability limitations.

Sidelink communication consists of one-to-many and one-to-one sidelink communication. One-to-many sidelink communication consists of relay related and non-relay related one-to-many sidelink communication. One-to-one sidelink communication consists of relay related and non-relay related one-to-one sidelink communication. In relay related one-to-one sidelink communication the communicating parties consist of one sidelink relay UE and one sidelink remote UE.

Sidelink discovery consists of public safety related (PS related) and non-PS related sidelink discovery. PS related sidelink discovery consists of relay related and non-relay related PS related sidelink discovery. Upper layers indicate to RRC whether a particular sidelink announcement is PS related or non-PS related.

The specification covers the use of UE to network sidelink relays by specifying the additional requirements that apply for a sidelink relay UE and a sidelink remote UE. I.e. for such UEs the regular sidelink UE requirements equally apply unless explicitly stated otherwise.

### 5.10.1a Conditions for sidelink operation

When it is specified that the UE shall perform a particular sidelink operation only if the conditions defined in this section are met, the UE shall perform the concerned sidelink operation only if:
1> if the UE's serving cell is suitable (RRC_IDLE or RRC_CONNECTED); and if either the selected cell on the frequency used for sidelink operation belongs to the registered or equivalent PLMN as specified in TS 24.334 [69] or the UE is out of coverage on the frequency used for sidelink operation as defined in TS 36.304 [4, 11.4]; or
1> if the UE is camped on a serving cell (RRC_IDLE) on which it fulfils the conditions to support sidelink communication in limited service state as specified in TS 23.303 [68, 4.5.6]; and if either the serving cell is on the frequency used for sidelink operation or the UE is out of coverage on the frequency used for sidelink operation as defined in TS 36.304 [4, 11.4]; or
1> if the UE has no serving cell (RRC_IDLE);

### 5.10.2 Sidelink UE information

### 5.10.2.1 General

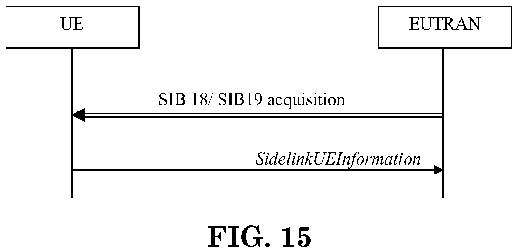

### [Figure 5.10.2-1 of 3GPP TS 36.331 v13.1.0, entitled "Sidelink UE information", is reproduced as FIG. 15]

The purpose of this procedure is to inform E-UTRAN that the UE is interested or no longer interested to receive sidelink communication or discovery, as well as to request assignment or release of transmission resources for sidelink communication or discovery announcements and to report parameters related to sidelink discovery from system information of inter-frequency/PLMN cells.

### 5.10.2.2 Initiation

A UE capable of sidelink communication or discovery that is in RRC_CONNECTED may initiate the procedure to indicate it is (interested in) receiving sidelink communication or discovery in several cases including upon successful connection establishment, upon change of interest, upon change to a PCell broadcasting *SystemInformationBlockType18* or *SystemInformationBlockType19.* A UE capable of sidelink communication or discovery may initiate the procedure to request assignment of dedicated resources for the concerned sidelink communication transmission or discovery announcements and a UE capable of inter-frequency/PLMN sidelink discovery parameter reporting may initiate the procedure to report parameters related to sidelink discovery from system information of inter-frequency/PLMN cells.
NOTE 1: A UE in RRC_IDLE that is configured to transmit sidelink communication/ discovery announcements, while *SystemInformationBlockType18*/ *SystemInformationBlockType19* does not include the resources for transmission (in normal conditions), initiates connection establishment in accordance with 5.3.3.1a.
   Upon initiating the procedure, the UE shall:

   ```
 1> if SystemInformationBlockType18 is broadcast by the PCell:
    2> ensure having a valid version of SystemInformationBlockType18 for the PCell;
    2> if configured by upper layers to receive sidelink communication:
       3> if the UE did not transmit a SidelinkUEInformation message since last entering
       RRC_CONNECTED state; or
       3> if since the last time the UE transmitted a SidelinkUEInformation message the UE
       connected to a PCell not broadcastingSystemInformationBlockType18; or
```
NOTE 2: After handover/ re-establishment from a source PCell not broadcasting *SystemInformationBlockType18* the UE repeats the same interest information that it provided previously as such a source PCell may not forward the interest information.

   ```
3> if the last transmission of the SidelinkUEInformation message did not include
       commRxInterestedFreq; or if the frequency configured by upper layers to receive
       sidelink communication on has changed since the last transmission of the
      SidelinkUEInformation message:
         4> initiate transmission of the SidelinkUEInformation message to indicate the
            sidelink communication reception frequency of interest in accordance with
            5.10.2.3;
    2> else:
       3> if the last transmission of the SidelinkUEInformation message included
       commRxInterestedFreq:
         4> initiate transmission of the SidelinkUElnformation message to indicate it is no
            longer interested in sidelink communication reception in accordance with
            5.10.2.3;
    2> if configured by upper layers to transmit non-relay related one-to-many sidelink
       communication:
       3> if the UE did not transmit a SidelinkUEInformation message since last entering
       RRC_CONNECTED state; or
       3> if since the last time the UE transmitted a SidelinkUEInformation message the UE
       connected to a PCell not broadcastingSystemInformationBlockType18; or
       3> if the last transmission of the SidelinkUEInformation message did not include
       commTxResourceReq; or if the information carried by the commTxResourceReq has
       changed since the last transmission of the SidelinkUElnformation message:
         4> initiate transmission of the SidelinkUEInformation message to indicate the non-
            relay related one-to-many sidelink communication transmission resources
            required by the UE in accordance with 5.10.2.3;
    2> else:
       3> if the last transmission of the SidelinkUEInformation message included
       commTxResourceReq:
         4> initiate transmission of the SidelinkUElnformation message to indicate it no
            longer requires non-relay related one-to-many sidelink communication
            transmission resources in accordance with 5.10.2.3;
    2> if configured by upper layer to transmit relay related one-to-many sidelink
       communication:
       3> if the UE did not transmit a SidelinkUEInformation message since entering
       RRC_CONNECTED state; or
       3> if since the last time the UE transmitted a SidelinkUEInformation message the UE
       connected to a PCell not broadcastingSystemInformationBlockType18, connected to a
       PCell not broadcasting SystemInformationBlockType19 or broadcasting
      SystemInformationBlockType19 not including discConfigRelay; or
       3> if the last transmission of SidelinkUElnformation message did not include
       commTxResourceReqRelay; or if the information carried by the
       commTxResourceReqRelay has changed since the last transmission of the
      SidelinkUEInformation message:
         4> if the UE is acting as sidelink relay UE:
            5> initiate transmission of the SidelinkUEInformation message to indicate the
               relay related one-to-many sidelink communication transmission resources
               required by the UE in accordance with 5.10.2.3;
    2> else:
       3> if the last transmission of the SidelinkUEInformation message included
       commTxResourceReqRelay:
         4> initiate transmission of the SidelinkUEInformation message to indicate it no
            longer requires relay related one-to-many sidelink communication transmission
            resources in accordance with 5.10.2.3;
    2> if configured by upper layers to transmit non-relay related one-to-one sidelink
       communication:
       3> if the UE did not transmit a SidelinkUEInformation message since last entering
       RRC_CONNECTED state; or
       3> if since the last time the UE transmitted a SidelinkUEInformation message the UE
       connected to a PCell not broadcasting SystemInformationBlockType18 or connected to
       a PCell broadcasting SystemInformationBlockType18 not including
       commTxResourceUC-ReqAllowed; or
       3> if the last transmission of the SidelinkUEInformation message did not include
       commTxResourceReqUC; or if the information carried by the commTxResourceReqUC
       has changed since the last transmission of the SidelinkUEInformation message:
         4> if commTxResourceUC-ReqAllowed is included in SystemInformationBlockType18:
            5> initiate transmission of the SidelinkUEInformation message to indicate the
               non-relay related one-to-one sidelink communication transmission resources
               required by the UE in accordance with 5.10.2.3;
    2> else:
       3> if the last transmission of the SidelinkUEInformation message included
       commTxResourceReqUC commTxResourceReqUC:
         4> initiate transmission of the SidelinkUElnformation message to indicate it no
            longer requires non-relay related one-to-one sidelink communication
            transmission resources in accordance with 5.10.2.3;
    2> if configured by upper layers to transmit relay related one-to-one sidelink
       communication:
       3> if the UE did not transmit a SidelinkUEInformation message since last entering
       RRC_CONNECTED state; or
       3> if since the last time the UE transmitted a SidelinkUEInformation message the UE
       connected to a PCell not broadcastingSystemInformationBlockType18, connected to a
       PCell not broadcasting SystemInformationBlockType19 or broadcasting
      SystemInformationBlockType19 not including discConfigRelay; or
       3> if the last transmission of the SidelinkUEInformation message did not include
       commTxResourceReqRelayUC; or if the information carried by the
       commTxResourceReqRelayUC has changed since the last transmission of the
      SidelinkUEInformation message:
         4> if the UE is acting as sidelink relay UE; or:
         4> if the UE has a selected sidelink relay UE; and if SystemInformationBlockType19 is
            broadcast by the PCell and includes discConfigRelay; and if the sidelink remote
            UE threshold conditions as specified in 5.10.11.5 are met;
            5> initiate transmission of the SidelinkUEInformation message to indicate the
               relay related one-to-one sidelink communication transmission resources
               required by the UE in accordance with 5.10.2.3;
    2> else:
       3> if the last transmission of the SidelinkUEInformation message included
       commTxResourceReqRelay:
         4> initiate transmission of the SidelinkUElnformation message to indicate it no
            longer requires relay related one-to-one sidelink communication transmission
            resources in accordance with 5.10.2.3;
 1> if SystemInformationBlockType19 is broadcast by the PCell:
    2> ensure having a valid version of SystemInformationBlockType19 for the PCell;
    2> if configured by upper layers to receive sidelink discovery announcements on a serving
       frequency or on one or more frequencies included in disclnterFreqList, if included in
      SystemInformationBlockType19 of the PCell:
       3> if the UE did not transmit a SidelinkUEInformation message since last entering
       RRC_CONNECTED state; or
       3> if since the last time the UE transmitted a SidelinkUEInformation message the UE
       connected to a PCell not broadcastingSystemInformationBlockType19; or
       3> if the last transmission of the SidelinkUEInformation message did not include
       discRxInterest:
         4> initiate transmission of the SidelinkUEInformation message to indicate it is
            interested in sidelink discovery reception in accordance with 5.10.2.3;
    2> else:
       3> if the last transmission of the SidelinkUEInformation message included
       discRxInterest:
         4> initiate transmission of the SidelinkUElnformation message to indicate it is no
            longer interested in sidelink discovery reception in accordance with 5.10.2.3;
    2> if the UE is configured by upper layers to transmit non-PS related sidelink discovery
       announcements on the primary frequency or on one or more frequencies included in
       disclnterFreqList, if included in SystemInformationBlockType19 of the PCell, with
       discTxResourceslnterFreq included within discResourcesNonPS and not set to
       noTxOnCarrier:
       3> if the UE did not transmit a SidelinkUEInformation message since last entering
       RRC_CONNECTED state; or
       3> if since the last time the UE transmitted a SidelinkUEInformation message the UE
       connected to a PCell not broadcasting SystemInformationBlockType19 or connected to
       a PCell broadcasting SystemInformationBlockType19 not including
       discTxResourceslnterFreq within discResourcesNonPS or which
       discTxResourceslnterFreq did not include all frequencies for which the UE will request
       resources; or
       3> if the last transmission of the SidelinkUEInformation message did not include
       discTxResourceReq; or if the sidelink discovery announcement resources required by
       the UE have changed (i.e. resulting in a change of discTxResourceReq) since the last
       transmission of the SidelinkUElnformation message:
         4> initiate transmission of the SidelinkUEInformation message to indicate the
            sidelink discovery announcement resources required by the UE in accordance
            with 5.10.2.3;
    2> else:
       3> if the last transmission of the SidelinkUEInformation message included
       discTxResourceReq:
         4> initiate transmission of the SidelinkUElnformation message to indicate it no
            longer requires sidelink discovery announcement resources in accordance with
            5.10.2.3;
    2> if configured by upper layers to transmit PS related sidelink discovery announcements
       on the primary frequency or, in case of non-relay PS related sidelink discovery
       announcements, on a frequency included in disclnterFreqList, if included in
      SystemInformationBlockType19, with discTxResourceslnterFreq included within
       discResourcesPS and not set to noTxOnCarrier:
       3> if the UE did not transmit a SidelinkUEInformation message since last entering
       RRC_CONNECTED state; or
       3> if since the last time the UE transmitted a SidelinkUEInformation message the UE
       connected to a PCell not broadcastingSystemInformationBlockType19, connected to a
       PCell broadcasting SystemInformationBlockType19 not including discConfigPS, or in
       case of non-relay PS related transmission: (connected to a PCell broadcasting
      SystemInformationBlockType19 not including discTxResourceslnterFreq within
       discResourcesPS or for which discTxResourceslnterFreq did not include all frequencies
       for which the UE will request resources), or in case of relay related PS sidelink
       discovery announcements: (connected to a PCell broadcasting
      SystemInformationBlockType19 not including discConfigRelay) sidelink; or
       3> if the last transmission of the SidelinkUEInformation message did not include
       discTxResourceReqPS; or if the PS related sidelink discovery announcement resources
       required by the UE have changed (i.e. resulting in a change of discTxResourceReqPS)
       since the last transmission of the SidelinkUEInformation message:
         4> if configured by upper layers to transmit non-relay PS related sidelink discovery
            announcements; or
         4> if the UE is acting as sidelink relay UE; and if SystemInformationBlockType19
            includes discConfigRelay; and if the sidelink relay UE threshold conditions as
            specified in 5.10.10.4 are met; or
         4> if the UE is selecting a sidelink relay UE/has a selected sidelink relay UE; and if
            SystemInformationBlockType19 includes discConfigRelay; and if the sidelink
            remote UE threshold conditions as specified in 5.10.11.5 are met:
            5> initiate transmission of the SidelinkUEInformation message to indicate the PS
               related sidelink discovery announcement resources required by the UE in
               accordance with 5.10.2.3;
    2> else:
       3> if the last transmission of the SidelinkUEInformation message included
       discTxResourceReqPS:
         4> initiate transmission of the SidelinkUElnformation message to indicate it no
            longer requires PS related sidelink discovery announcement resources in
            accordance with 5.10.2.3;
    2> if configured by upper layers to monitor or transmit sidelink discovery announcements;
       and if the UE requires sidelink discovery gaps, to perform such actions:
       3> if the UE did not transmit a SidelinkUEInformation message since last entering
       RRC_CONNECTED state; or
       3> if since the last time the UE transmitted a SidelinkUEInformation message the UE
       connected to a PCell not broadcasting SystemInformationBlockType19 or connected to
       a PCell broadcasting SystemInformationBlockType19 not including
       gapRequestsAllowedCommon while at the same time the UE was not configured with
       gapRequestsAllowedDedicated; or
       3> if the last transmission of the SidelinkUElnformation message did not include the
       gaps required to monitor or transmit the sidelink discovery announcements (i.e. UE
       requiring gaps to monitor discovery announcements while discRxGapReq was not
       included or UE requiring gaps to transmit discovery announcements while
       discTxGapReq was not included); or if the sidelink discovery gaps required by the UE
       have changed (i.e. resulting in a change of discRxGapReq or discTxGapReq) since the
       last transmission of the SidelinkUElnformation message:
         4> if the UE is configured with gapRequestsAllowedDedicated set to true; or
         4> if the UE is not configured with gapRequestsAllowedDedicated and
            gapRequestsAllowedCommon is included in SystemInformationBlockType19:
            5> initiate transmission of the SidelinkUEInformation message to indicate the
               sidelink discovery gaps required by the UE in accordance with 5.10.2.3;
    2> else:
       3> if the last transmission of the SidelinkUEInformation message included
       discTxGapReq or discRxGapReq:
         4> initiate transmission of the SidelinkUEInformation message to indicate it no
            longer requires sidelink discovery gaps in accordance with 5.10.2.3;
    2> if the UE acquired the relevant parameters from the system information of one or
       more cells on a carrier included in the discSysInfoToReportConfig and T370 is running:
       3> if the UE has configured lower layers to transmit or monitor the sidelink
       discovery announcements on those cells:
         4> initiate transmission of the SidelinkUEInformation message to report the
            acquired system information parameters and stop T370;
```

### 5.10.2.3 Actions related to transmission of SidelinkUEInformation message

The UE shall set the contents of the *SidelinkUEInformation* message as

```
 1> if the UE initiates the procedure to indicate it is (no more) interested to receive sidelink
    communication or discovery or to request (configuration/ release) of sidelink
    communication or discovery transmission resources (i.e. UE includes all concerned
    information, irrespective of what triggered the procedure):
    2> if SystemInformationBlockType18 is broadcast by the PCell:
       3> if configured by upper layers to receive sidelink communication:
         4> include commRxInterestedFreq and set it to the sidelink communication
            frequency;
       3> if configured by upper layers to transmit non-relay related one-to-many sidelink
       communication:
         4> include commTxResourceReq and set its fields as
            5> set carrierFreq to indicate the sidelink communication frequency i.e. the same
               value as indicated in commRxInterestedFreq if included;
            5> set destinationlnfoList to include the sidelink communication transmission
               destination(s) for which it requests E-UTRAN to assign dedicated resources;
       3> if configured by upper layers to transmit non-relay related one-to-one sidelink
       communication; and
       3> if commTxResourceUC-ReqAllowed is included in
       System InformationBlockType18:
         4> include commTxResourceReqUC and set its fields as follows:
            5> set carrierFreq to indicate the sidelink one-to-one communication frequency
               i.e. the same value as indicated in commRxInterestedFreq if included;
            5> set destinationlnfoList to include the sidelink one-to-one communication
               transmission destination(s) for which it requests E-UTRAN to assign dedicated
               resources;
       3> if configured by upper layers to transmit relay related one-to-one sidelink
       communication; and
       3> if SystemInformationBlockType19 is broadcast by the PCell including
       discConfigRelay; and
       3> if the UE is acting as sidelink relay UE; or if the UE has a selected sidelink relay
       UE; and if the sidelink remote UE threshold conditions as specified in 5.10.11.5 are
       met:
         4> include commTxResourceReqRelayUC and set its fields as follows:
            5> set destinationlnfoList to include the (unicast) sidelink communication
               transmission destination(s) for which it requests E-UTRAN to assign dedicated
               resources;
         4>include ue-Type and set it to relayUE-Config if the UE is acting as sidelink relay UE
            and to remoteUE otherwise;
       3> if configured by upper layers to transmit relay related one-to-many sidelink
       communication; and
       3> if SystemInformationBlockType19 is broadcast by the PCell including in
       discConfigRelay; and
       3> if the UE is acting as sidelink relay UE:
         4> include commTxResourceReqRelay and set its fields as follows:
            5> set destinationlnfoList to include the (groupcast) sidelink communication
               transmission destination(s) for which it requests E-UTRAN to assign dedicated
               resources;
         4> include ue-Type and set it to relayUE-Config;
    2> if SystemInformationBlockType19 is broadcast by the PCell:
       3> if configured by upper layers to receive sidelink discovery announcements on a
       serving frequency or one or more frequencies included in disclnterFreqList, if included
       in SystemInformationBlockType19:
         4> include discRxInterest;
       3> if the UE is configured by upper layers to transmit non-PS related sidelink
       discovery announcements:
         4> for each frequency on which the UE is configured to transmit non-PS related
            sidelink discovery announcements that concerns the primary frequency or that is
            included in disclnterFreqList with discTxResourceslnterFreq included within
            discResourcesNonPS and not set to noTxOnCarrier:
            5> for the first frequency, include discTxResourceReq and set it to indicate the
               number of discovery messages for sidelink discovery announcement(s) for
               which it requests E-UTRAN to assign dedicated resources as well as the
               concerned frequency, if different from the primary;
            5> for any additional frequency, include discTxResourceReqAddFreq and set it to
               indicate the number of discovery messages for sidelink discovery
               announcement(s) for which it requests E-UTRAN to assign dedicated
               resources as well as the concerned frequency;
       3> if configured by upper layers to transmit PS related sidelink discovery
       announcements; and
       3> if the frequency on which the UE is configured to transmit PS related sidelink
       discovery announcements either concerns the primary frequency or, in case of non-
       relay PS related sidelink discovery announcements, is included in discInterFreqList with
       discTxResources InterFreq included within discResourcesPS and not set to
       noTxOnCarrier:
         4> if configured by upper layers to transmit non-relay PS related sidelink discovery
            announcements and SystemInformationBlockType19 includes discConfigPS; or
         4> if the UE is acting as sidelink relay UE; and if SystemInformationBlockType19
            includes discConfigRelay; and if the sidelink relay UE threshold conditions as
            specified in 5.10.10.4 are met; or
         4> if the UE is selecting a sidelink relay UE/has a selected sidelink relay UE; and if
            SystemInformationBlockType19 includes discConfigRelay; and if the sidelink
            remote UE threshold conditions as specified in 5.10.11.5 are met:
            5> include discTxResourceReqPS and set it to indicate the number of discovery
               messages for PS related sidelink discovery announcement(s) for which it
               requests E-UTRAN to assign dedicated resources as well as the concerned
               frequency, if different from the primary;
 1> else if the UE initiates the procedure to request transmission and/ or reception gaps:
    2> if the UE is configured with gapRequestsAllowedDedicated set to true; or
    2> if the UE is not configured with gapRequestsAllowedDedicated and
       gapRequestsAllowedCommon is included in SystemInformationBlockType19:
       3> if the UE requires sidelink discovery gaps to monitor the sidelink discovery
       announcements the UE is configured to monitor by upper layers:
         4> include discRxGapReq and set it to indicate, for each frequency that either
            concerns the primary frequency or is included in disclnterFreqList on which the
            UE is configured to monitor sidelink discovery announcements and for which it
            requires sidelink discovery gaps to do so, the gap pattern(s) as well as the
            concerned frequency, if different from the primary;
       3> if the UE requires sidelink discovery gaps to transmit the sidelink discovery
       announcements the UE is configured to transmit by upper layers:
         4> include discTxGapReq and set it to indicate, for each frequency that either
            concerns the primary or is included in disclnterFreqList on which the UE is
            configured to transmit sidelink discovery announcements and for which it
            requires sidelink discovery gaps to do so, the gap pattern(s) as well as the
            concerned frequency, if different from the primary;
 1> else if the UE initiates the procedure to report the system information parameters related
    to sidelink discovery of carriers other than the primary:
    2> include SL-DiscSysInfoReportFreqList and set it to report the system information
       parameter acquired from the cells on those carriers
```

The UE shall submit the *SidelinkUEInformation* message to lower layers for transmission.

### 5.10.3 Sidelink communication monitoring

A UE capable of sidelink communication that is configured by upper layers to receive sidelink communication shall:

```
 1> if the conditions for sidelink operation as defined in 5.10.1a are met:
    2> if in coverage on the frequency used for sidelink communication, as defined in TS
       36.304 [4, 11.4]:
       3> if the cell chosen for sidelink communication reception broadcasts
      SystemInformationBlockType18 including commRxPool:
         4> configure lower layers to monitor sidelink control information and the
            corresponding data using the pool of resources indicated by commRxPoo/;
 NOTE 1: If commRxPool includes one or more entries including rxParametersNCell, the UE
          may only monitor such entries if the associated PSS/SSS or SLSSIDs is detected.
         When monitoring such pool(s), the UE applies the timing of the concerned PSS/SSS
         or SLSS.
    2> else (i.e. out of coverage on the sidelink carrier):
       3> configure lower layers to monitor sidelink control information and the
       corresponding data using the pool of resources that were preconfigured (i.e.
      preconfigComm in SL-Preconfiguration defined in 9.3);
 NOTE 2: The UE may monitor in accordance with the timing of the selected SyncRef UE, or if
         the UE does not have a selected SyncRef UE, based on the UE's own timing.
```

### 5.10.4 Sidelink communication transmission

A UE capable of sidelink communication that is configured by upper layers to transmit sidelink communication and has related data to be transmitted or a UE capable of relay related sidelink communication that is configured by upper layers to transmit relay related sidelink communications shall:

```
 1> if the conditions for sidelink operation as defined in 5.10.1a are met:
    2> if in coverage on the frequency used for sidelink communication, as defined in TS
       36.304 [4, 11.4]:
       3> if the UE is in RRC_CONNECTED and uses the PCell for sidelink communication:
         4> if the UE is configured, by the current PCell/ the PCell in which physical layer
            problems or radio link failure was detected, with commTxResources set to
            scheduled:
            5> if T310 or T311 is running; and if the PCell at which the UE detected physical
               layer problems or radio link failure broadcasts SystemInformationBlockType18
               including commTxPoolExceptional; or
            5> if T301 is running and the cell on which the UE initiated connection re-
               establishment broadcasts SystemInformationBlockType18 including
               commTxPoolExceptional:
               6> configure lower layers to transmit the sidelink control information and the
                  corresponding data using the pool of resources indicated by the first entry
                  in commTxPoolExceptional;
            5> else:
               6> configure lower layers to request E-UTRAN to assign transmission
                  resources for sidelink communication;
         4> else if the UE is configured with commTxPoolNormalDedicated:
            5> if priorityList is included for the entries of commTxPoolNormalDedicated:
               6> configure lower layers to transmit the sidelink control information and the
                  corresponding data using the one or more pools of resources indicated by
                  commTxPoolNormalDedicated i.e. indicate all entries of this field to lower
                  layers;
            5> else:
               6> configure lower layers to transmit the sidelink control information and the
                  corresponding data using the pool of resources indicated by the first entry
                  in commTxPoolNormalDedicated;
        3> else (i.e. sidelink communication in RRC_IDLE or on cell other than PCell in
   RRC_CONNECTED):
         4> if the cell chosen for sidelink communication transmission broadcasts
            SystemInformationBlockType18:
            5> if SystemInformationBlockType18 includes commTxPoolNormalCommon:
               6> if priorityList is included for the entries of commTxPoolNormalCommon or
                  commTxPoolNormalCommonExt:
                  7> configure lower layers to transmit the sidelink control information and
                     the corresponding data using the one or more pools of resources
                     indicated by commTxPoolNormalCommon and/or
                     commTxPoolNormalCommonExt i.e. indicate all entries of these fields to
                     lower layers;
               6> else:
                  7> configure lower layers to transmit the sidelink control information and
                     the corresponding data using the pool of resources indicated by the first
                     entry in commTxPoolNormalCommon;
            5> else if SystemInformationBlockType18 includes commTxPoolExceptional:
               6> from the moment the UE initiates connection establishment until receiving
                  an RRCConnectionReconfiguration including sl-CommConfig or until
                  receiving an RRCConnectionRelease or an RRCConnectionReject;
                     7> configure lower layers to transmit the sidelink control information
                        and the corresponding data using the pool of resources indicated by
                        the first entry in commTxPoolExceptional;
    2> else (i.e. out of coverage on sidelink carrier):
       3> if priorityList is included for the entries of preconfigComm in SL-Preconfiguration
  defined in 9.3:
         4> configure lower layers to transmit the sidelink control information and the
            corresponding data using the one or more pools of resources indicated
            preconfigComm i.e. indicate all entries of this field to lower layers and in
            accordance with the timing of the selected SyncRef UE, or if the UE does not
            have a selected SyncRef UE, based on the UEs own timing;
        3> else:
         4> configure lower layers to transmit the sidelink control information and the
            corresponding data using the pool of resources that were preconfigured i.e.
            indicated by the first entry in preconfigComm in SL-Preconfiguration defined in
            9.3 and in accordance with the timing of the selected SyncRef UE, or if the UE
            does not have a selected SyncRef UE, based on the UEs own timing;
 1> if the transmission concerns sidelink relay communication; and the UE is capable of
    sidelink relay or sidelink remote operation:
    2> if the UE is in RRC_IDLE; and if the UE has a selected sidelink relay: configure lower
       layers to transmit the sidelink control information and the corresponding data using
       the resources,as specified previously in this section, only if the following condition is
       met:
         3> if the sidelink remote UE threshold conditions as specified in 5.10.11.5 are met;
    2> configure lower layers to transmit the sidelink control information and the
       corresponding data using the resources, as specified previously in this section, only if
       the following condition is met:
         3> if the UE configured lower layers with a pool of resources included in
         SystemInformationBlockType18 (i.e. commTxPoolNormalCommon,
         commTxPoolNormalCommonExt or commTxPoolExceptional); and
         commTxAllowRelayCommon is included in SystemInformationBlockType18; or
         3> if the UE configured lower layers with resources provided by dedicated signalling
          (i.e. commTxResources); and the UE is configured with commTxAllowRelayDedicated
         set to true
         [...]
```

3GPP TS36.321 describes the detail about sidelink resource request mechanism including Sidelink BSR mechanism, sidelink grant reception, LCP procedure and sidelink communication mechanism as follows:

### 5.14 SL-SCH Data transfer

### 5.14.1 SL-SCH Data transmission

### 5.14.1.1 SL Grant reception and SCI transmission

In order to transmit on the SL-SCH the MAC entity must have at least one sidelink grant. Sidelink grants are selected as
- if the MAC entity is configured to receive a single sidelink grant dynamically on the PDCCH and more data is available in STCH than can be transmitted in the current SC period, the MAC entity shall:
   - using the received sidelink grant determine the set of subframes in which transmission of SCI and transmission of first transport block occur according to subclause 14.2.1 of [2];
   - consider the received sidelink grant to be a configured sidelink grant occurring in those subframes starting at the beginning of the first available SC Period which starts at least 4 subframes after the subframe in which the sidelink grant was received, overwriting a previously configured sidelink grant occurring in the same SC period, if available;
   - clear the configured sidelink grant at the end of the corresponding SC Period;
- else, if the MAC entity is configured by upper layers to receive multiple sidelink grants dynamically on the PDCCH and more data is available in STCH than can be transmitted in the current SC period, the MAC entity shall for each received sidelink grant:
   - using the received sidelink grant determine the set of subframes in which transmission of SCI and transmission of first transport block occur according to subclause 14.2.1 of [2];
   - consider the received sidelink grant to be a configured sidelink grant occurring in those subframes starting at the beginning of the first available SC Period which starts at least 4 subframes after the subframe in which the sidelink grant was received, overwriting a previously configured sidelink grant received in the same subframe number but in a different radio frame as this configured sidelink grant occurring in the same SC period, if available;
   - clear the configured sidelink grant at the end of the corresponding SC Period;
- else, if the MAC entity is configured by upper layers to transmit using one or multiple pool(s) of resources as indicated in subclause 5.10.4 of [8] and more data is available in STCH than can be transmitted in the current SC period, the MAC entity shall for each sidelink grant to be selected:
   - if configured by upper layers to use a single pool of resources:
      - select that pool of resources for use;
   - else, if configured by upper layers to use multiple pools of resources:
      - select a pool of resources for use from the pools of resources configured by upper layers whose associated priority list includes the priority of the highest priority of the sidelink logical channel in the MAC PDU to be transmitted;

- NOTE: If more than one pool of resources has an associated priority list which includes the priority of the sidelink logical channel with the highest priority in the MAC PDU to be transmitted, it is left for UE implementation which one of those pools of resources to select.
   - randomly select the time and frequency resources for SL-SCH and SCI of a sidelink grant from the selected resource pool. The random function shall be such that each of the allowed selections [2] can be chosen with equal probability;
   - use the selected sidelink grant to determine the set of subframes in which transmission of SCI and transmission of first transport block occur according to subclause 14.2.1 of [2];
   - consider the selected sidelink grant to be a configured sidelink grant occurring in those subframes starting at the beginning of the first available SC Period which starts at least 4 subframes after the subframe in which the sidelink grant was selected;
   - clear the configured sidelink grant at the end of the corresponding SC Period;
- NOTE: Retransmissions on SL-SCH cannot occur after the configured sidelink grant has been cleared.
- NOTE: If the MAC entity is configured by upper layers to transmit using one or multiple pool(s) of resources as indicated in subclause 5.10.4 of [8], it is left for UE implementation how many sidelink grants to select within one SC period taking the number of sidelink processes into account.

The MAC entity shall for each subframe:
- if the MAC entity has a configured sidelink grant occurring in this subframe:
   - if the configured sidelink grant corresponds to transmission of SCI:
      - instruct the physical layer to transmit SCI corresponding to the configured sidelink grant.
   - else if the configured sidelink grant corresponds to transmission of first transport block:
      - deliver the configured sidelink grant and the associated HARQ information to the Sidelink HARQ Entity for this subframe.

   - NOTE: If the MAC entity has multiple configured grants occurring in one subframe and if not all of them can be processed due to the single-cluster SC-FDM restriction, it is left for UE implementation which one of these to process according to the procedure above.

### 5.14.1.2 Sidelink HARQ operation

### 5.14.1.2.1 Sidelink HARQ Entity

There is one Sidelink HARQ Entity at the MAC entity for transmission on SL-SCH, which maintains a number of parallel Sidelink processes.

The number of transmitting Sidelink processes associated with the Sidelink HARQ Entity is defined in [8].

A delivered and configured sidelink grant and its associated HARQ information are associated with a Sidelink process.

For each subframe of the SL-SCH and each Sidelink process, the Sidelink HARQ Entity shall:
- if a sidelink grant has been indicated for this Sidelink process and there is SL data, for sidelink logical channels of ProSe destination associated with this sidelink grant, available for transmission:
   - obtain the MAC PDU from the "Multiplexing and assembly" entity;
   - deliver the MAC PDU and the sidelink grant and the HARQ information to this Sidelink process;
   - instruct this Sidelink process to trigger a new transmission.
- else, if this subframe corresponds to retransmission opportunity for this Sidelink process:
   - instruct this Sidelink process to trigger a retransmission.

- NOTE: The resources for retransmission opportunities are specified in subclause 14.2.1 of [2].

### 5.14.1.2.2 Sidelink process

The Sidelink process is associated with a HARQ buffer.

The sequence of redundancy versions is 0, 2, 3, 1. The variable CURRENT_IRV is an index into the sequence of redundancy versions. This variable is updated modulo 4.

New transmissions and retransmissions for a given SC period are performed on the resource indicated in the sidelink grant and with the MCS configured by upper layers (if configured).

If the Sidelink HARQ Entity requests a new transmission, the Sidelink process shall:
- set CURRENT_IRV to 0;
- store the MAC PDU in the associated HARQ buffer;
- store the sidelink grant received from the Sidelink HARQ Entity;
- generate a transmission as described below.

If the Sidelink HARQ Entity requests a retransmission, the Sidelink process shall:
- generate a transmission as described below.

To generate a transmission, the Sidelink process shall:
- if there is no uplink transmission or if the MAC entity is able to perform uplink transmissions and transmissions on SL-SCH simultaneously at the time of the transmission, and:
- if there is no Sidelink Discovery Gap for Transmission or no transmission on PSDCH at the time of the transmission:
   - instruct the physical layer to generate a transmission according to the stored sidelink grant with the redundancy version corresponding to the CURRENT_IRV value.
   - increment CURRENT_IRV by 1.

### 5.14.1.3 Multiplexing and assembly

For PDU(s) associated with one SCI, MAC shall consider only logical channels with the same Source Layer-2 ID-Destination Layer-2 ID pair.

Multiple transmissions within overlapping SC periods to different ProSe Destinations are allowed subject to single-cluster SC-FDM constraint.

### 5.14.1.3.1 Logical channel prioritization

The Logical Channel Prioritization procedure is applied when a new transmission is performed. Each sidelink logical channel has an associated priority which is the PPPP. Multiple sidelink logical channels may have the same associated priority. The mapping between priority and LCID is left for UE implementation.

The MAC entity shall perform the following Logical Channel Prioritization procedure for each SCI transmitted in an SC period:
- The MAC entity shall allocate resources to the sidelink logical channels in the following steps:
   - Step 0: Select a ProSe Destination, not previously selected for this SC period, having the sidelink logical channel with the highest priority, among the sidelink logical channels having data available for transmission;
   - Step 1: Among the sidelink logical channels belonging to the selected ProSe Destination and having data available for transmission, allocate resources to the sidelink logical channel with the highest priority;
   - Step 2: if any resources remain, sidelink logical channels belonging to the selected ProSe Destination are served in decreasing order of priority until either the data for the sidelink logical channel(s) or the SL grant is exhausted, whichever comes first. Sidelink logical channels configured with equal priority should be served equally.
- The UE shall also follow the rules below during the scheduling procedures above:
   - the UE should not segment an RLC SDU (or partially transmitted SDU) if the whole SDU (or partially transmitted SDU) fits into the remaining resources;
   - if the UE segments an RLC SDU from the sidelink logical channel, it shall maximize the size of the segment to fill the grant as much as possible;
   - the UE should maximise the transmission of data;
   - if the MAC entity is given an sidelink grant size that is equal to or larger than 10 bytes while having data available for transmission, the MAC entity shall not transmit only padding.

### 5.14.1.3.2 Multiplexing of MAC SDUs

The MAC entity shall multiplex MAC SDUs in a MAC PDU according to subclauses 5.14.1.3.1 and 6.1.6.

### 5.14.1.4 Buffer Status Reporting

The sidelink Buffer Status reporting procedure is used to provide the serving eNB with information about the amount of sidelink data available for transmission in the SL buffers associated with the MAC entity. RRC controls BSR reporting for the sidelink by configuring the two timers *periodic-BSR-TimerSL* and *retx-BSR-TimerSL.* Each sidelink logical channel belongs to a ProSe Destination. Each sidelink logical channel is allocated to an LCG depending on the priority of the sidelink logical channel and the mapping between LCG ID and priority which is provided by upper layers in *logicalChGroupInfoList* [8]. LCG is defined per ProSe Destination.

A sidelink Buffer Status Report (BSR) shall be triggered if any of the following events occur:
- if the MAC entity has a configured SL-RNTI:
   - SL data, for a sidelink logical channel of a ProSe Destination, becomes available for transmission in the RLC entity or in the PDCP entity (the definition of what data shall be considered as available for transmission is specified in [3] and [4] respectively) and either the data belongs to a sidelink logical channel with higher priority than the priorities of the sidelink logical channels which belong to any LCG belonging to the same ProSe Destination and for which data is already available for transmission, or there is currently no data available for transmission for any of the sidelink logical channels belonging to the same ProSe Destination, in which case the Sidelink BSR is referred below to as "Regular Sidelink BSR";
   - UL resources are allocated and number of padding bits remaining after a Padding BSR has been triggered is equal to or larger than the size of the Sidelink BSR MAC control element containing the buffer status for at least one LCG of a ProSe Destination plus its subheader, in which case the Sidelink BSR is referred below to as "Padding Sidelink BSR";
   - *retx-BSR-TimerSL* expires and the MAC entity has data available for transmission for any of the sidelink logical channels, in which case the Sidelink BSR is referred below to as "Regular Sidelink BSR";
   - *periodic-BSR-TimerSL* expires, in which case the Sidelink BSR is referred below to as "Periodic Sidelink BSR";
- else:
   - An SL-RNTI is configured by upper layers and SL data is available for transmission in the RLC entity or in the PDCP entity (the definition of what data shall be considered as available for transmission is specified in [3] and [4] respectively), in which case the Sidelink BSR is referred below to as "Regular Sidelink BSR".

For Regular and Periodic Sidelink BSR:
- if the number of bits in the UL grant is equal to or larger than the size of a Sidelink BSR containing buffer status for all LCGs having data available for transmission plus its subheader:
   - report Sidelink BSR containing buffer status for all LCGs having data available for transmission;
   - else report Truncated Sidelink BSR containing buffer status for as many LCGs having data available for transmission as possible, taking the number of bits in the UL grant into consideration.

For Padding Sidelink BSR:
- if the number of padding bits remaining after a Padding BSR has been triggered is equal to or larger than the size of a Sidelink BSR containing buffer status for all LCGs having data available for transmission plus its subheader:
   - report Sidelink BSR containing buffer status for all LCGs having data available for transmission;
- else report Truncated Sidelink BSR containing buffer status for as many LCGs having data available for transmission as possible, taking the number of bits in the UL grant into consideration.

If the Buffer Status reporting procedure determines that at least one Sidelink BSR has been triggered and not cancelled:
- if the MAC entity has UL resources allocated for new transmission for this TTI and the allocated UL resources can accommodate a Sidelink BSR MAC control element plus its subheader as a result of logical channel prioritization:
   - instruct the Multiplexing and Assembly procedure to generate the Sidelink BSR MAC control element(s);
   - start or restart *periodic-BSR-TimerSL* except when all the generated Sidelink BSRs are Truncated Sidelink BSRs;
   - start or restart *retx-BSR-TimerSL;*
- else if a Regular Sidelink BSR has been triggered:
   - if an uplink grant is not configured:
      - a Scheduling Request shall be triggered.

A MAC PDU shall contain at most one Sidelink BSR MAC control element, even when multiple events trigger a Sidelink BSR by the time a Sidelink BSR can be transmitted in which case the Regular Sidelink BSR and the Periodic Sidelink BSR shall have precedence over the padding Sidelink BSR.

The MAC entity shall restart *retx-BSR-TimerSL* upon reception of an SL grant.

All triggered regular Sidelink BSRs shall be cancelled in case the remaining configured SL grant(s) valid for this SC Period can accommodate all pending data available for transmission. All triggered Sidelink BSRs shall be cancelled in case the MAC entity has no data available for transmission for any of the sidelink logical channels. All triggered Sidelink BSRs shall be cancelled when a Sidelink BSR (except for Truncated Sidelink BSR) is included in a MAC PDU for transmission. All triggered Sidelink BSRs shall be cancelled, and *retx-BSR-TimerSL* and *periodic-BSR-TimerSL* shall be stopped, when upper layers configure autonomous resource selection.

The MAC entity shall transmit at most one Regular/Periodic Sidelink BSR in a TTI. If the MAC entity is requested to transmit multiple MAC PDUs in a TTI, it may include a padding Sidelink BSR in any of the MAC PDUs which do not contain a Regular/Periodic Sidelink BSR.

All Sidelink BSRs transmitted in a TTI always reflect the buffer status after all MAC PDUs have been built for this TTI. Each LCG shall report at the most one buffer status value per TTI and this value shall be reported in all Sidelink BSRs reporting buffer status for this LCG.
- NOTE: A Padding Sidelink BSR is not allowed to cancel a triggered Regular/Periodic Sidelink BSR. A Padding Sidelink BSR is triggered for a specific MAC PDU only and the trigger is cancelled when this MAC PDU has been built.

### 5.14.2 SL-SCH Data reception

### 5.14.2.1 SCI reception

SCI transmitted on the PSCCH indicate if there is a transmission on SL-SCH and provide the relevant HARQ information.

The MAC entity shall:
- for each subframe during which the MAC entity monitors PSCCH:
   - if SCI for this subframe has been received on the PSCCH with a Group Destination ID of interest to this MAC entity:
      4 - determine the set of subframes in which reception of the first transport blocks occur according to subclause 14.2.2 of [2] using the received SCI;
      5 - store the SCI and associated HARQ information as SCI valid for the subframes corresponding to first transmission of each transport block;
- for each subframe for which the MAC entity has a valid SCI:
   - deliver the SCI and the associated HARQ information to the Sidelink HARQ Entity.

### 5.14.2.2 Sidelink HARQ operation

### 5.14.2.2.1 Sidelink HARQ Entity

There is one Sidelink HARQ Entity at the MAC entity for reception of the SL-SCH which maintains a number of parallel Sidelink processes. Each Sidelink process is associated with SCI in which the MAC entity is interested as determined by the Group Destination ID of the SCI. The Sidelink HARQ Entity directs HARQ information and associated TBs received on the SL-SCH to the corresponding Sidelink processes.

The number of Receiving Sidelink processes associated with the Sidelink HARQ Entity is defined in [8].

For each subframe of the SL-SCH, the Sidelink HARQ Entity shall:
- for each SCI valid in this subframe:
   - allocate the TB received from the physical layer and the associated HARQ information to a Sidelink process, associate this Sidelink process with this SCI and consider this transmission to be a new transmission.
- for each Sidelink process:
   6 - if this subframe corresponds to retransmission opportunity for the Sidelink process according to its associated SCI:
   - allocate the TB received from the physical layer and the associated HARQ information to the Sidelink process and consider this transmission to be a retransmission.

### 5.14.2.2.2 Sidelink process

For each subframe where a transmission takes place for the Sidelink process, one TB and the associated HARQ information is received from the Sidelink HARQ Entity.

The sequence of redundancy versions is 0, 2, 3, 1. The variable CURRENT_IRV is an index into the sequence of redundancy versions. This variable is updated modulo 4.

For each received TB and associated HARQ information, the Sidelink process shall:
- if this is a new transmission:
   - set CURRENT_IRV to 0;
   - store the received data in the soft buffer and optionally attempt to decode the received data according to CURRENT_IRV.
- else if this is a retransmission:
   - if the data for this TB has not yet been successfully decoded:
      7 - increment CURRENT_IRV by 1;
      8 - combine the received data with the data currently in the soft buffer for this TB and optionally attempt to decode the combined data according to the CURRENT_IRV.
- if the data which the MAC entity attempted to decode was successfully decoded for this TB:
   - if this is the first successful decoding of the data for this TB:
      9 - if the DST field of the decoded MAC PDU subheader is equal to the 16 MSB of any of the Destination Layer-2 ID(s) of the UE for which the 8 LSB are equal to the Group Destination ID in the corresponding SCI:
         - deliver the decoded MAC PDU to the disassembly and demultiplexing entity.

### 5.14.2.3 Disassembly and demultiplexing

The MAC entity shall disassemble and demultiplex a MAC PDU as defined in subclause 6.1.6. **[...]**

### 6.1.3.1a Sidelink BSR MAC Control Elements

Sidelink BSR and Truncated Sidelink BSR MAC control elements consist of one Destination Index field, one LCG ID field and one corresponding Buffer Size field per reported target group.

The Sidelink BSR MAC control elements are identified by MAC PDU subheaders with LCIDs as specified in table 6.2.1-2. They have variable sizes.

For each included group, the fields are defined as follows (figures 6.1.3.1a-1 and 6.1.3.1a-2):
- Destination Index: The Destination Index field identifies the ProSe Destination. The length of this field is 4 bits. The value is set to the index of the destination reported in *destinationInfoList* and if *destinationInfoListUC* is also reported, the value is indexed sequentially across both lists specified in [8];
- LCG ID: The Logical Channel Group ID field identifies the group of logical channel(s) which buffer status is being reported. The length of the field is 2 bits;
- Buffer Size: The Buffer Size field identifies the total amount of data available across all logical channels of a LCG of a ProSe Destination after all MAC PDUs for the TTI have been built. The amount of data is indicated in number of bytes. It shall include all data that is available for transmission in the RLC layer and in the PDCP layer; the definition of what data shall be considered as available for transmission is specified in [3] and [4] respectively. The size of the RLC and MAC headers are not considered in the buffer size computation. The length of this field is 6 bits. The values taken by the Buffer Size field are shown in Table 6.1.3.1-1;
- R: Reserved bit, set to "0".

Buffer Sizes of LCGs are included in decreasing order of the highest priority of the sidelink logical channel belonging to the LCG irrespective of the value of the Destination Index field.

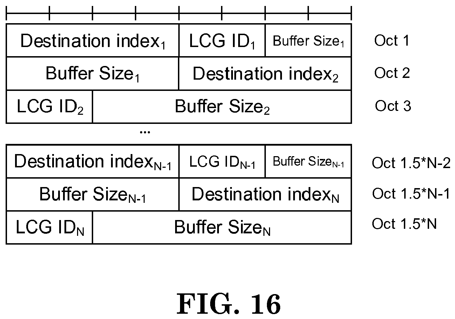

### [Figure 6.1.3.1a-1 of 3GPP TS36.321 v13.1.0, entitled "Sidelink BSR and Truncated Sidelink BSR MAC control element for even N", is reproduced as FIG. 16.]

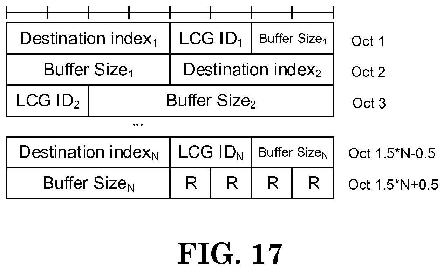

### [Figure 6.1.3.1a-2 of 3GPP TS36.321 v13.1.0, entitled "Sidelink BSR and Truncated Sidelink BSR MAC control element for odd N", is reproduced as FIG. 17] [...]

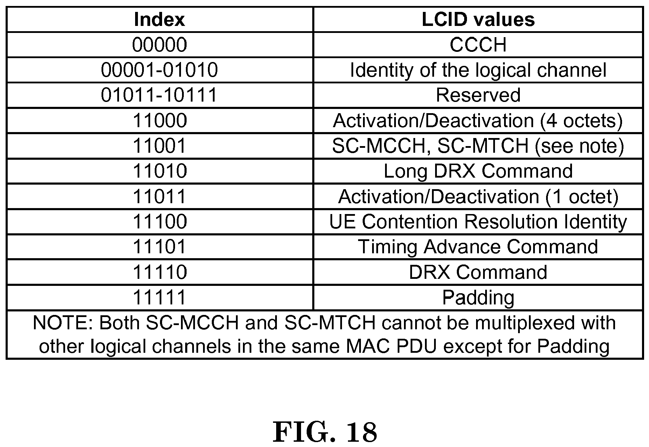

### [Table 6.2.1-1 of 3GPP TS36.321 v13.1.0, entitled "Values of LCID for DL-SCH", is reproduced as FIG. 18]

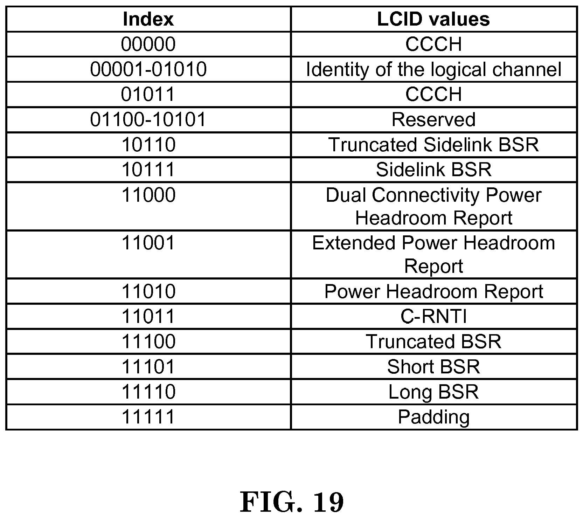

### [Table 6.2.1-2 of 3GPP TS36.321 v13.1.0, entitled "Values of LCID for UL-SCH", is reproduced as FIG. 19] [...]

Regarding the new SI, a new type of UE-to-Network relay will be designed for supporting commercial IoT and wearable. Based on the requirements, the design of the new type of UE-to-Network relay shall take remote UE's power efficiency, security, and end-to-end reachability into account. In the RAN2#93bis discussion (described in 3GPP R2-163056), Layer-2 relay design for the new type of UE-to-Network relay is a kind of solution for achieving the requirements. However, the detail of how to establish layer-2 mapping between relay UE, remote UE, and eNB is not clear. Moreover, the new SI also considers enhancement for the E2E (End to End) QoS (Quality of Service) which cannot be achieved in the Rel-13 relay architecture. Therefore, PC5 interface resource utilization will be key feature for achieving such enhancement. In our assumption, the remote UE will establish bi-directional communication path with the relay UE on the D2D interface. And all uplink data transmission will go through the relay session for reducing power consumption. In general, the invention generally focused on how to achieve E2E QoS of the remote UE in below based on above assumptions. The discussion below pertains to an aspect of how a remote UE provide its buffer status to/through a relay UE and an aspect of how eNB obtain the remote UE's buffer status from the relay UE. The remote UE's buffer status could be transmitted as a BSR CE (Control Element) similar to legacy. The Sidelink BSR is used as example for the BSR CE. The BSR CE could also be a new type of BSR CE or uplink BSR CE.

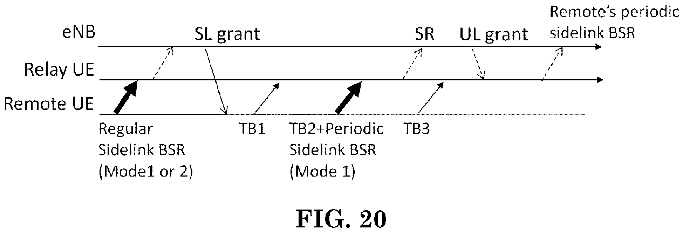

**Issue 3 and Solution** - Based on certain assumptions, a remote UE will send its sidelink BSR through the PC5 interface to the associated relay UE for saving power. For regular sidelink BSR, it would be no problem to use either contention based resource or dedicated resource for transmission. However, for periodic sidelink BSR, it is not recommended to use contention based resource owing to large number of IoT devices may provide their periodic sidelink BSRs concurrently and thus collision rate probably increase. Moreover, periodical transmission without any limitation will also have power consumption concern. This baseline mechanism is shown in FIG. 20.

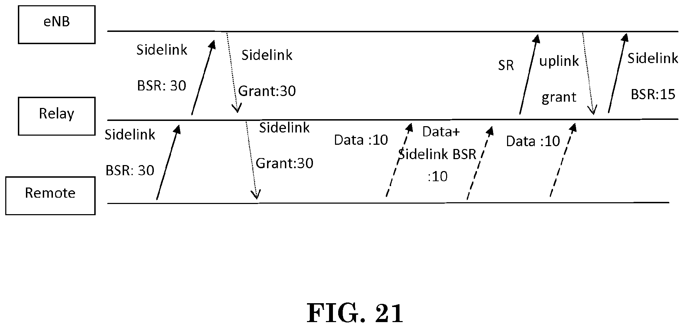

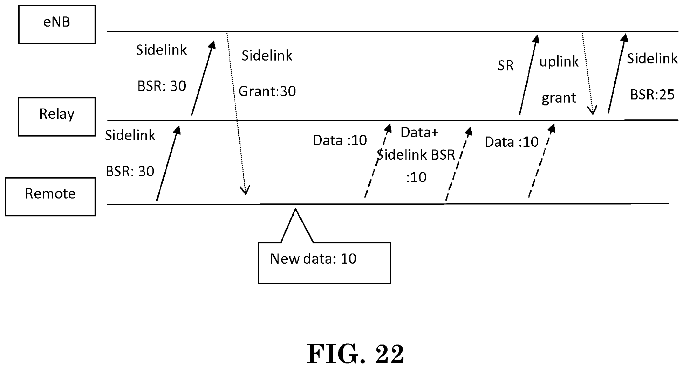

Considering sidelink BSR is relayed by the relay UE, the eNB will have no idea on when the sidelink BSR is triggered. In addition, since the relay UE enforces its LCP on sidelink BSRs from all remote UEs, the delay variance of remote UE's sidelink BSR to the eNB may be large. As result, the eNB may misinterpret the buffer status of the remote UE and schedule resource based on incorrect understanding. Possible exemplary cases of the issue are illustrated in FIG. 21 and FIG. 22. In FIG. 21, network allocates a sidelink grant with 30 units resource separated in three transmission opportunities, 10 units for each transmission opportunity. An updated sidelink BSR is transmitted in the second transmission opportunity from the remote UE to the relay UE and the sidelink BSR takes 5 units resource. Although the eNB received the last Sidelink BSR from the relay UE, the eNB may not know that the last Sidelink BSR represents the buffer status of the remote UE in the condition of the second transmission opportunity. Hence, it will be difficult for eNB to decide whether to schedule resource based on the last Sidelink BSR. A similar condition occurs in FIG. 22.

To achieve E2E QoS of the remote UE, it is expected that the eNB could provide sidelink resource on demand and meet the delay requirement. The invention proposes an idea to make eNB well estimate the buffer status of a remote UE. The general concept of the invention is to enforce remote UE to trigger and send a sidelink BSR, which could be a regular and periodic sidelink BSR, at a fixed/predefined timing.

More specifically, the fixed/predefined timing is associated to transmission opportunity of a SL grant allocated to the remote UE (e.g., a specific new transmission opportunity, the first new transmission opportunity, or the last new transmission opportunity, etc.). Thus, eNB can estimate and/or predict buffer status of a remote UE considering the traffic volume and report timing of its sidelink BSR. Specifically, when a remote UE receives a sidelink grant sent either from eNB via PDCCH on Uu interface or from a relay UE via PC5 interface, the remote UE will perform data transmission on the next SC period. The remote UE may have several new transmission opportunities in the SC period. The sidelink BSR could be triggered and sent at the last new transmission opportunity. Since the sidelink resource is scheduled by the eNB. The eNB knows that the sidelink BSR reflects the buffer status of the remote UE at the timing of last new transmission. Alternatively, the sidelink BSR could be triggered and sent at the first new transmission opportunity.

Preferably, the Sidelink BSR is a regular Sidelink BSR. Alternatively, the Sidelink BSR is a periodic Sidelink BSR. Furthermore, if there is no data remaining in the UE, the Sidelink BSR will be cancelled. In addition, such Sidelink BSR design could also benefit a scenario that the relay UE is response to handle the remote UE's Sidelink buffer status. Since the new triggered Sidelink BSR can always reflect the latest buffer status (e.g., always transmit in last new transmission opportunity), the relay UE can simply update the buffer status without any complex calculation for different cases.

In real implementation, the Sidelink BSR could be triggered earlier, but the Sidelink BSR will be included in the predefined timing. Hence, the outer behaviour will be that a transmission to the relay UE in the predefined timing (e.g., first new transmission opportunity, last transmission opportunity, and so on) always included a Sidelink BSR.

Another method is to change the contents reported by Sidelink BSR. Currently, a Sidelink BSR transmitted in Uu link is for reporting the buffer status in the subframe of the Sidelink BSR transmission. And the invention proposes that Sidelink BSR transmitted on PC5 interface reports buffer status of remaining data with considering all available Sidelink resource. In other words, the UE will calculate buffer status in report as current buffer size reduced by total data size can be accommodated by all remaining transmission opportunities in all sidelink grants.

**Issue 4 and Solutions** - For improving E2E QoS of the remote UE, the simplest way is to let eNB be capable to schedule the remote UE based on the remote UE's need. However, since the remote UE will not directly communicate with the eNB due to power saving, the eNB cannot understand the remote UE's need and further schedule resource based on the remote UE's need. At least two kinds of mechanism are discussed here for the eNB to get information about the remote UE's resource demand.

The first kind of mechanism is a relay UE forwards the remote UE's Sidelink BSR to eNB. For this kind of mechanism, it is assumed that the remote UE will reuse legacy Sidelink BSR mechanism for reporting its resource need. However, one difference compared with legacy is that the remote UE will transmit the triggered Sidelink BSR on PC5 interface to the relay UE for forwarding. In detail, the remote UE may use contention resource to transmit the triggered Sidelink BSR, if the trigged Sidelink BSR is a regular Sidelink BSR. If the triggered Sidelink BSR is periodic Sidelink BSR, it may be transmitted through allocated dedicated Sidelink resource (e.g., PC5 resource received from the relay UE or the eNB) to the relay UE. Preferably, no padding Sidelink BSR can be transmitted through the Sidelink grant.

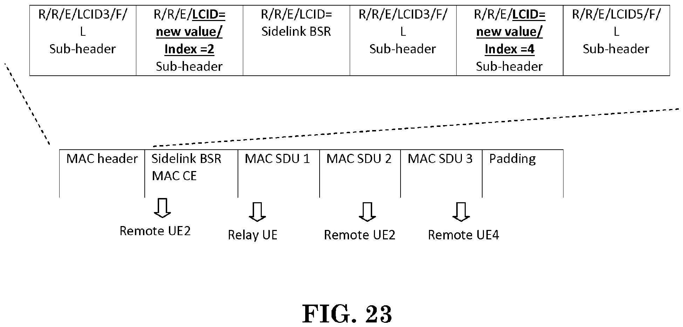

When the remote UE's Sidelink BSR was received by the relay UE, the relay UE will need to handle transmission of the remote UE's Sidelink BSR. The relay UE will need uplink resource for forwarding the remote UE's Sidelink BSR. A possible forwarding format is shown in FIG. 23.

If legacy design concept is taken into account, one simple way is to consider the remote UE's Sidelink BSR as a new type of regular BSR and can trigger SR transmission. By this way, the relay UE can make sure there will be uplink resource for the remote UE's Sidelink BSR. However, this way may have some drawbacks.

One drawback is that the SR will be frequently triggered if there are periodic/regular Sidelink BSR continuously came from remote UEs, because the relay UE cannot differentiate periodic Sidelink BSR and regular Sidelink BSR based on sidelink BSR received from the remote UE.

As consequence, the relay UE will consume more power on PDCCH monitoring. Another drawback is that it will be more difficult for eNB to allocate appropriate UL resource for responding SR from the relay UE. In addition, the new type of regular BSR may need a new format and consume more uplink source. Considering the drawbacks, another possible way is proposed to request resource for forwarding remote UEs' Sidelink BSR. The remote UE's Sidelink BSR will be considered as a special uplink data and trigger UL BSR for requesting resource. On the other hand, the relay UE's Sidelink BSR will still remain as legacy. Preferably, the remote UE's Sidelink BSR may be considered as highest priority uplink data.

Generally, this kind of trigger for SR transmission may not be limited to remote UE's sidelink BSR. Some traffic from remote UE may be treated as an event to trigger SR transmission. The general concept of the invention is that a MAC CE sent from a remote UE can trigger SR transmission at a relay UE side if there is no uplink resource. Specifically, when the relay UE receives a transport block from the remote UE and the transport block includes a sidelink BSR MAC CE and/or a power headroom report MAC CE. These kinds of CEs are time sensitive and should be sent to eNB as soon as possible. Therefore, the relay UE may consider this scenario as a new type of regular BSR and thus may trigger SR transmission if there is no available uplink resource. More specifically, if the transport block includes any MAC SDU, those MAC SDU may finally trigger regular BSR at relay UE side; therefore, the method could be further enhanced to be applied for a transport block sent from a remote UE includes only MAC CE(s), i.e., no MAC SDU or no MAC SDU for relaying.

Alternatively, the relay UE may treat the sidelink BSR MAC CE and/or the power headroom report MAC CE sent from the remote UE as higher priority data and trigger an uplink BSR. The buffer status of the uplink BSR includes the size of the sidelink BSR MAC CE and/or power headroom report MAC CE.

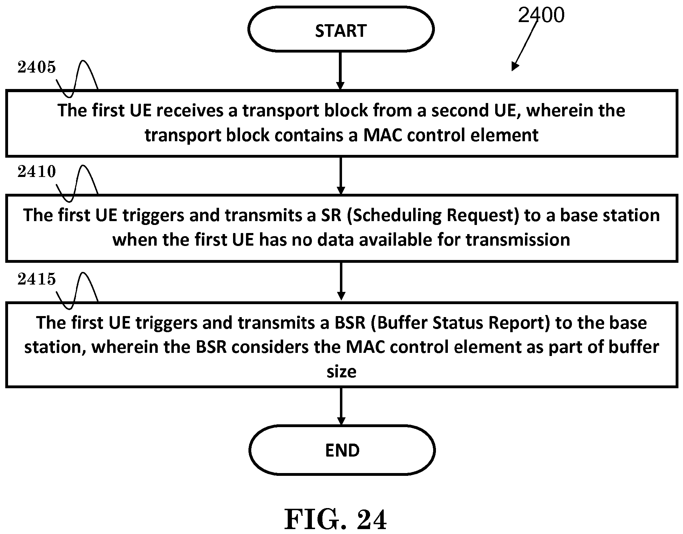

FIG. 24 is a flow chart 2400 according to one exemplary embodiment from the perspective of a first UE supporting device-to-device relay communication. In step 2405, the first UE receives a transport block from a second UE, wherein the transport block contains a MAC control element.

Preferably, the first UE could be a relay UE, and the second UE could be a remote UE. Preferably, the device-to-device relay communication could be the first UE relays the second UE's data to the base station. Furthermore, the device-to-device relay communication could be the first UE relays the second UE's data from the base station to the second UE.

Preferably, the transport block does not include any MAC SDU (Service Data Unit) that needs to be relayed. Furthermore, the MAC control element could be a MAC control element for sidelink.

Preferably, the MAC SDUs refers to data from the second UE to be relayed to the base station. In addition, the MAC SDUs could be MAC SDUs which are to be relayed to the base station.

In step 2410, the first UE triggers a BSR. In step2415, the first UE triggers and transmits a SR (Scheduling Request) to a base station when the first UE has no data available for transmission and has no uplink resource for transmission of the BSR. In step 2420, the first UE transmits the BSR to the base station, wherein the BSR considers the MAC control element as part of buffer size.

Referring back to FIGS. 3 and 4, in one exemplary embodiment of a first UE, the device 300 includes a program code 312 stored in the memory 310 program code 312. The CPU 308 could execute program code 312 to enable the first UE (i) to receive a transport block from a second UE, wherein the transport block contains a MAC control element, (ii) to trigger a BSR(Buffer Status Report), (iii) to trigger and transmit a SR (Scheduling Request) to a base station when the first UE has no data available for transmission and has no uplink resource for transmission of the BSR, and (iv) to transmit the BSR to the base station, wherein the BSR considers the MAC control element as part of buffer size. Furthermore, the CPU 308 can execute the program code 312 to perform all of the above-described actions and steps or others described herein, including those descibed above under "Issue 1 and Solution", "Issue 2 and Solution", "Issue 3 and Solution", and below under "Issue 5 and Solutions" and "Issue 6 and Solutions". Furthermore, besides the individual implementation, the program code might enable the (first) UE to perform a full or partial combination thereof, as the invention enables that, besides the individual realization, all or any part of the described issues and solutions can be combined.

**Issue 5 and Solutions -** Based on the above methods, eventually, the relay UE will receive uplink grant from the eNB. Furthermore, the relay UE will need to decide which content will be included into a transport block based on LCP procedure. In this procedure, two potential issues need to be handled. Firstly, what priority of the remote UEs' Sidelink BSR shall be considered in LCP procedure? Secondly, can a remote UE's Sidelink BSR be transmitted through multiple UL grants?

Regarding the first issue, a possible priority setting for the remote UE's Sidelink BSR in the relay UE is listed below.

*Option 1 -* Relay UE's CCCH (Common Control Channel) > Relay UE's BSR > Relay UE's PHR (Power Headroom Report) > Relay UE's Sidelink BSR = Remote UE's Sidelink BSR (Based on LCG or PPPP) > data > padding.

*Option 2 -* Relay UE's CCCH > Relay UE's BSR > Relay UE's PHR > Relay UE's Sidelink BSR >Remote UE's Sidelink BSR> data > padding.

Note: the PHR could also be extendedPHR, dualConnectivityPHR, or even other future uplink power report related control element.

However, considering a case of an insufficient uplink grant, the remote UE's Sidelink BSR may be partially included into a TB (Transport Block) created according to the uplink grant. Normally, the UE will include more important information (e.g., higher priority) into the TB as much as possible. However, regarding the Sidelink BSR or MAC SDUs received from the remote UE, the relay UE may not understand the priority of such received information. For instance, in legacy, the Sidelink BSR contains many LCGs (Logical Channel Groups), and each LCG is associated with a specific set of logical channel priority. The association is decided by an eNB and dedicatedly configure to a UE. In previous condition, when a relay UE receives a sidelink BSR from a remote UE, the relay UE cannot decide which part of information is more important to include first since the relay UE does not know association between the LCG and logical channel priority, e.g., PPPP (Pro-Se Per Packet Priority). Hence, the eNB may not be able to obtain important information as soon as possible. To solve the issue, the eNB can provide the remote UE's association to the relay UE for helping the relay UE to make the proper decision of including order. The relay UE will take the association into account for both *Option 1* and *Option 2.* Moreover, for *Option 1*, the relay UE will further take both the remote UE's association and its own association between LCG and logical channel priority into account.

Furthermore, even in a case where the relay UE will not forwarding the remote UE's buffer status, providing a remote UE's configuration information to relay UE would be beneficial for the relay UE to correctly understand priority of each LCG in a Sidelink BSR received from the remote UE. Based on that, the relay UE may reorder the buffer status and update the information as a solution for Issue 6 (discussed below) or may directly schedule resource to higher priority data in the remote UE. Alternatively, it can be done by the relay UE passing its LCG/PPPP configuration (as discussed above) to the remote UE for aligning the configuration and also the understanding of the configuration.

The relay UE can handle any control elements or packers received from the remote UE following the relay UE's prioritization rule. Alternatively, it can be broadcasted to all UEs for aligning understanding of remote UE's configuration. By this way, the relay UE can share the information. Preferably, the relay UE does not apply the configuration in the broadcast message. Alternatively, the relay UE could apply the same configuration in the broadcast message.

On the other hand, when the relay UE decides the including order, the relay UE will include partial Sidelink BSR information received from the remote UE into the TB for the case mentioned above. The UE could also include the partial Sidelink BSR with a little change. For example, replacing a new MAC subheader, or adding extra indication(s) into the partial Sidelink BSR for other purposes.

Regarding a case of an insufficient uplink grant, because network may not provide sufficient uplink grant for accommodating uplink BSR, the relay UE's Sidelink BSR, and the remote UE's Sidelink BSR, the relay UE will include part of those BSRs into a TB. Following legacy design, a Sidelink BSR can be partially included into a TB and the subheader of the included part shall set to truncated Sidelink BSR for informing eNB that there is remaining part. It would be reasonable that the mechanism can also be reused on the new type of BSR, say remote UE's sidelink BSR. However, a problem may occur in a case that all included BSRs are complete BSR, but some new type of regular BSR could still remain. In such case, although the type of regular BSR can autonomously trigger SR, relying on such mechanism may have some penalties (e.g., redundant SR transmission, delay, etc.).

One way to solve the issue is to define a new LCID for representing that there is pending control element(s) in the UE. Preferably, the new LCID could be used in a subheader of a BSR. In addition, the BSR could be a Sidelink BSR, and the Sidelink BSR could be a Sidelink BSR received from a remote UE for forwarding.

In another implementation, the new LCID could be used for indicating whether buffer status in the BSR already take control elements into account. Preferably, the UE will not set the new LCID to a Sidelink BSR when the Sidelink BSR is incompletely included into a TB.

Alternatively, the new LCID could be used in a new MAC control element. In addition, the new MAC control element could indicate how many pending control elements are in a UE (e.g., relay UE). Preferably, the pending control elements could be Sidelink BSR control elements. In addition, the pending control elements could be control elements received from other UEs. Furthermore, the pending control elements could be control elements in the UE (e.g., PHR CE, Sidelink BSR CE, etc.).

Preferably, the new MAC control element has higher priority than BSR control element in current LCP procedure. Alternatively, the new MAC control element has higher priority than Sidelink BSR control element in current LCP procedure. Alternatively, the new MAC control element has higher priority than uplink PHR control element in current LCP procedure.

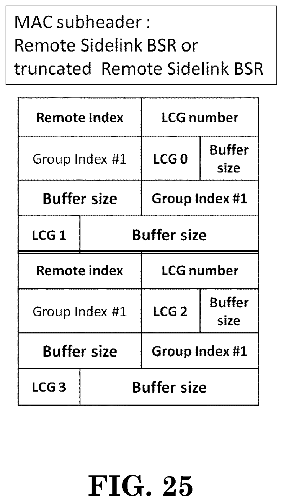

Another way to solve the problem is to let all remote UE's Sidelink BSR CEs share a MAC subheader for indicating that multiple control elements of the same or similar purpose. Preferably, the new MAC subheader could include a field for indicating which target UE's control element, and another field to indicate the boundary, or number, of buffer status control elements of the same target UE. An exemplary embodiment is shown in FIG. 25. In FIG. 25, the remote UE index is for eNB identifying the belonging of a control element. Since the each LCG pair (e.g., destination index+LCG+buffer size) has the same length, the field for LCG number can indicate the length or boundary of the control element.

**Issue 6 and Solutions -** Another mechanism for the eNB to get information about the remote UE's resource demand is that the relay UE triggers and reports Sidelink BSR for the remote UE's need. With this mechanism, a remote UE will maintain legacy Sidelink BSR mechanism. However, the triggered Sidelink BSR will be transmitted to a relay UE through PC5 interface. The detail can refer to above related content.

When the relay UE receives a Sidelink BSR from the remote UE, the content of the Sidelink BSR from the remote UE will be considered as a new type of available data of the link by the relay UE. Following the legacy Sidelink BSR mechanism, the relay UE will reflect the new type of available data in a relay UE's Sidelink BSR and transmit the relay UE's Sidelink BSR to a base station for requesting Sidelink resource. Furthermore, since the relay UE does not really own the remote UE's data, the relay UE will need to update buffer status of new type of available data to the latest condition when the relay UE receives a Sidelink BSR from the remote UE.

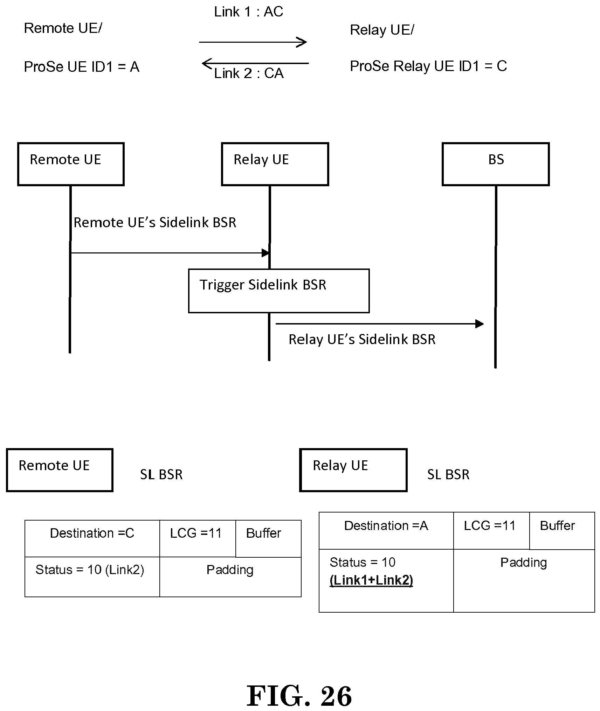

Preferably, the base station could schedule resource to the relay UE based on the relay UE's Sidelink BSR. Furthermore, the relay UE may provide part or all scheduled sidelink resources to the remote UE. Alternatively, the base station could directly schedule resource to the remote UE. An exemplary embodiment is shown in FIG. 26. Regarding LCP procedure of Sidelink in this case, the relay UE may need to decide how to use a received SL grant. If the relay UE decides to use the received SL grant on new type of available data of a relay link (e.g., based on PPPP information, LCG), the relay UE will provide partial of or complete the received SL grant to the remote UE.

The main benefit of this solution is to avoid creating new MAC CEs on the Uu interface for differentiating remote UE's buffer status from the relay UE's buffer status. However, there are two potential drawbacks of this solution. First, it may be difficult for the base station to differentiate remote UE's buffer status from the relay UE's buffer status in a received Sidelink BSR. Thus, the scheduling for the link between the relay UE and the remote UE may have risk of resource waste. Second, the remote UE cannot request other PC5 link resource through this method.

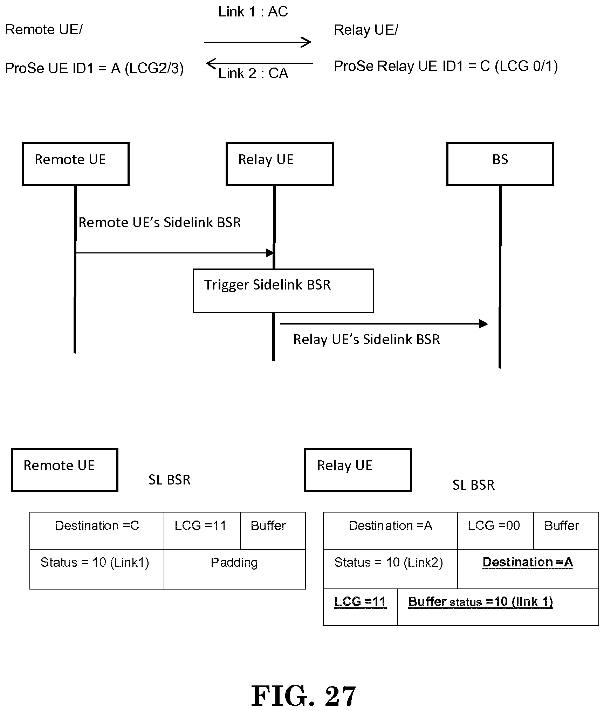

Regarding the first drawback, there are some possible methods for alleviating the penalty. One possible method is to separate the buffer status of remote UE and relay UE into different LCGs of a link. This can be achieved by the base station configuration. An exemplary embodiment is shown in FIG. 27.

Another possible method is to separate the buffer status of remote UE and relay UE into different Sidelink BSRs. To achieve this method, the relay UE will need to create another link for reporting remote UE's buffer status. Hence, the relay UE may report two links for a relay session through *SidelinkUEInformation,* including: one link for DL direction of the relay session (which will be done following legacy design), and one link for UL direction of the relay session (e.g., including the ProSe UE ID of the relay UE into destinationInfoList or create new IE similar to *commTxResourceReqRelay*).

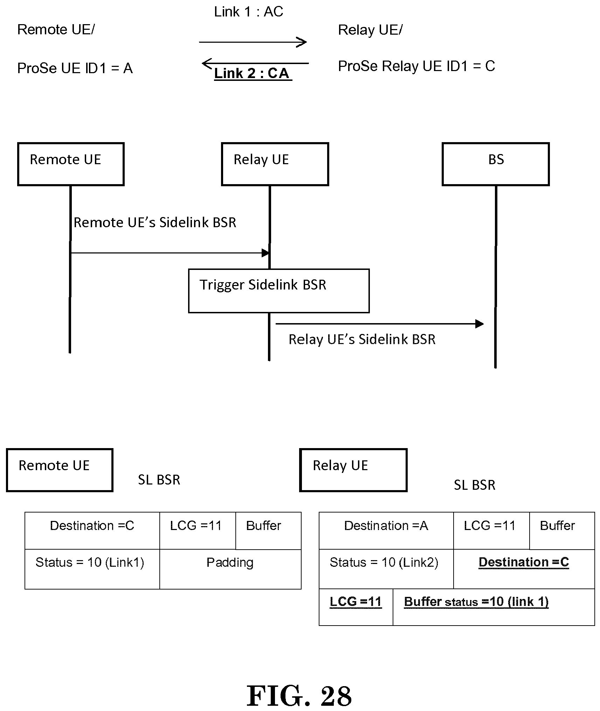

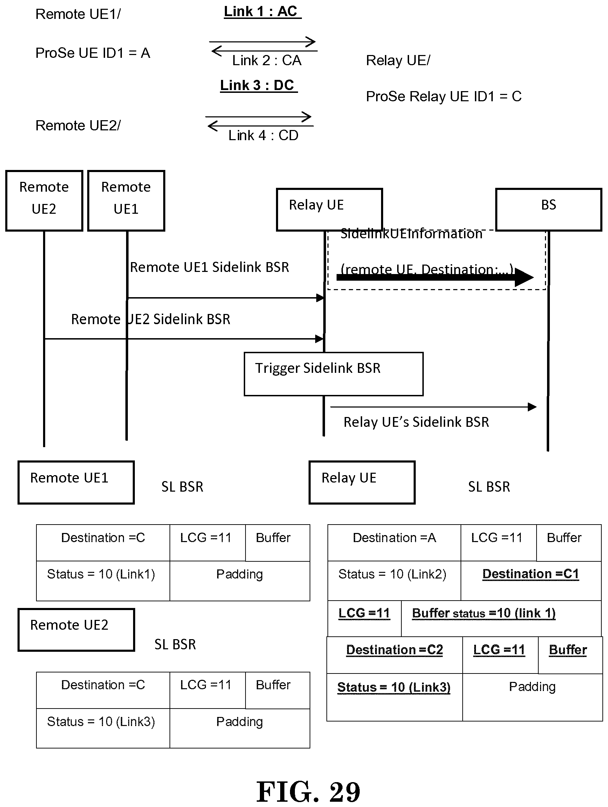

When the relay UE receives a Sidelink BSR from a remote UE associated with a relay session, the buffer status in the Sidelink BSR will be considered as new available data for the link representing UL direction of the relay session. Examples of this embodiment are shown in FIG. 28 and FIG. 29. When the relay UE receives a SL grant and decides to use it on a link representing UL direction of a relay session, the relay UE may provide the SL grant to the remote UE associating with the relay session.

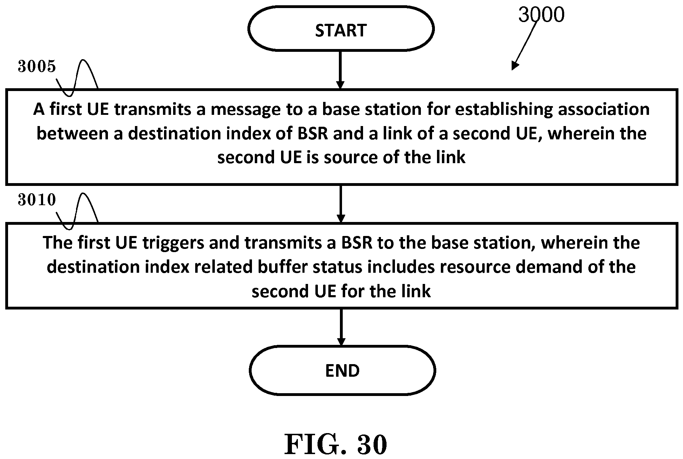

FIG. 30 is a flow chart 3000 according to one exemplary embodiment. In step 3005, a first UE transmits a message to a base station for establishing association between a destination index of BSR and a link of a second UE, wherein the second UE is source of the link. In step 3010, the first UE triggers and transmits a BSR to the base station, wherein the destination index related buffer status includes resource demand of the second UE for the link.

Preferably, the message could include an identity of the second UE. Alternatively, the message could include an identity of the first UE and an identity of the second UE as a pair. In addition, the message could include the destination index and an identity of the second UE. Furthermore, the message could be a *SidelinkUEInformation* or a RRC (Radio Resource Control) message.

Preferably, data related to a buffer status of the second UE could be pending in the second UE, when the first UE transmits the BSR. Furthermore, the BSR could be a sidelink BSR. In addition, the link of a second UE could be for forwarding data from the second UE to another UE (including the first UE) through device-to-device interface.

Referring back to FIGS. 3 and 4, in one exemplary embodiment of a first UE, the device 300 includes a program code 312 stored in the memory 310. The CPU 308 could execute program code 312 to enable the first UE (i) to transmit a message to a base station for establishing association between a destination index of BSR and a link of a second UE, wherein the second UE is source of the link, and (ii) to trigger and transmit a BSR to the base station, wherein the destination index related buffer status includes resource demand of the second UE for the link. Furthermore, the CPU 308 can execute the program code 312 to perform all of the above-described actions and steps or others described herein.

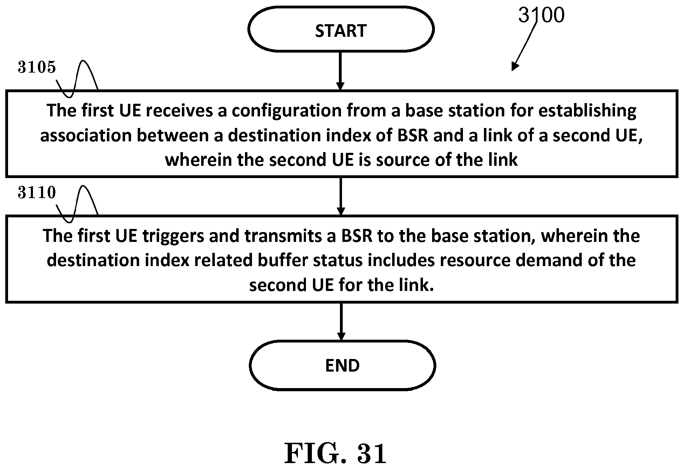

FIG. 31 is a flow chart 3100 according to one exemplary embodiment from the perspective of a UE. In step 3105, the first UE receives a configuration from a base station for establishing association between a destination index of BSR and a link of a second UE, wherein the second UE is source of the link.

Preferably, the configuration could include an identity (e.g., ProSe UE ID) of the second UE, an identity of the first UE and an identity of the second UE as a pair, and/or the destination index and an identity of the second UE. In addition, the configuration could be included in *RRCConnectionReconfiguration* or a RRC message.

In step 3110, the first UE triggers and transmits a BSR to the base station, wherein the destination index related buffer status includes resource demand of the second UE for the link. Preferably, the first UE could be a relay UE, and the second UE could be a remote UE.

Preferably, the device-to-device relay communication could be the first UE relays the second UE's data to the base station. Alternatively, the device-to-device relay communication could be the first UE relays the second UE's data from the base station to the second UE.

Preferably, the link of the second UE could be a link for the second UE transmitting messages to the first UE. Alternatively, the link of the second UE is a link for the second UE to transmit messages to the first UE for relaying.

Referring back to FIGS. 3 and 4, in one exemplary embodiment of a first UE, the device 300 includes a program code 312 stored in the memory 310. The CPU 308 could execute program code 312 to enable the first UE (i) to receive a configuration from a base station for establishing association between a destination index of BSR and a link of a second UE, and (ii) to trigger and transmit a BSR to the base station, wherein the destination index related buffer status includes resource demand of the second UE for the link. Furthermore, the CPU 308 can execute the program code 312 to perform all of the above-described actions and steps or others described herein.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for a first User Equipment, in the following also referred to as UE, to support device-to-device relay communication in a wireless communication system, comprising:
the first UE receives a transport block from a second UE, wherein the transport block contains a Media Access Control, in the following also referred to as MAC, control element (2405); and
the first UE triggers (2410) and transmits a Buffer Status Report, in the following also referred to as BSR, to a base station, wherein the BSR considers the MAC control element as part of buffer size (2420).

2. The method of claim 1, wherein the first UE triggers and transmits a Scheduling Request, in the following also referred to as SR, to the base station when the first UE has no data available for transmission and has no uplink resource for transmission of the BSR (2415).

3. The method of claim 1 or 2, wherein the transport block does not include any MAC Service Data Unit, in the following also referred to as SDU, that needs to be relayed.

4. The method of any one of claims 1 to 3, wherein the MAC control element is a MAC control element for sidelink, an uplink BSR, or a new type of BSR control element.

5. A method of supporting device-to-device communication in a wireless communication system, comprising:
a first User Equipment, in the following also referred to as UE, transmits a message to a base station for establishing association between a destination index of Buffer Status Report, in the following also referred to as BSR, and a link of a second UE, wherein the second UE is source of the link (3005); and
the first UE triggers and transmits a BSR to the base station, wherein the destination index related buffer status includes resource demand of the second UE for the link (3010).

6. The method of claim 5, wherein the message includes an identity of the second UE.

7. The method of claim 5 or 6, wherein the message includes an identity of the first UE and an identity of the second UE as a pair.

8. The method of any one of claims 5 to 7, wherein data related to the buffer status of the second UE for the link is pending in the second UE, when the first UE transmits the BSR.

9. The method of any one of claims 5 to 8, wherein the BSR is a sidelink BSR, an uplink BSR, or a new type of BSR control element.

10. The method of any one of claims 5 to 9, wherein the link of the second UE is for forwarding data from the second UE to another UE, including the first UE, through device-to-device interface.

11. A first User Equipment, in the following also referred to as UE, (300), comprising:
a control circuit (306);
a processor (308) installed in the control circuit (306); and
a memory (310) installed in the control circuit (306) and operatively coupled to the processor(308);
wherein the processor (308) is configured to execute a program code (312) stored in the memory (310) to perform the method steps as defined in any one of the preceding claims.
